# EUROPEAN PATENT SPECIFICATION

(11) **EP 4 459 158 B1**
(45) Date of publication and mention of the grant of the patent: **30.09.2026**
(21) Application number: 23819923.6
(22) Date of filing: 09.06.2023
(51) Int. Cl.: F16H 63/30, F16H 63/38, F16H 63/18, F16H 3/30

(54) **TRANSMISSION**
GETRIEBE
BOÎTE DE VITESSES

(30) Priority: 09.06.2022 WO PCT/JP2022/023250
(43) Date of publication of application: 06.11.2024
(73) Proprietor: Yamaha Hatsudoki Kabushiki Kaisha, Iwata-shi, Shizuoka 438-8501 (JP)
(72) Inventor: OSAWA, Kenta, Iwata-shi, Shizuoka 438-8501 (JP); NAITO, Shinji, Iwata-shi, Shizuoka 438-8501 (JP); HOSHINA, Taiji, Iwata-shi, Shizuoka 438-8501 (JP); HIROSE, Ryotaro, Iwata-shi, Shizuoka 438-8501 (JP)
(74) Representative: Stöckeler, Ferdinand
(86) International application number: PCT/JP2023/021598
(87) International publication number: WO 2023/238943

(56) References cited:
- WO-A1-2020/250535
- WO-A1-2020/250535
- JP-A- 2021 014 895
- JP-A- 2021 014 895

## Description

### [Technical Field]

The present invention relates to a transmission, and particularly relates to a transmission capable of performing seamless shift up.

In a known transmission having shift gears, a slider provided on a power transmission shaft (an input shaft or an output shaft) moves in the axial direction in order to change speed stages. As the slider moves in the axial direction, the slider is connected to a shift gear provided on the power transmission shaft or the slider is disconnected from a shift gear provided on the power transmission shaft. In the transmission, a driving force may be interrupted due to disconnection between the slider and the shift gear in shift up. As a scheme for shortening the time of interruption of the driving force, for example, seamless shift up has been demanded.

For example, Patent Literature 1 discloses a transmission which is capable of performing seamless shift up. The transmission of Patent Literature 1 is arranged so that, when shifting up, two sliders are temporarily connected to the shift gear at the same time. In the transmission of Patent Literature 1 in this state, a force in an axial direction is generated to cancel the connection of one of the two sliders. With this arrangement, seamless shift up is achieved without interrupting the transmission of power. In addition to this, the transmission of Patent Literature 1 is provided with a cam biasing mechanism that is provided on the outer circumference of each of an input shaft and an output shaft so as to make contact with a cam surface on the slider. As the cam biasing mechanism is pressed onto the cam surface of the slider, the slider receives a force acting toward the shift gear. When a torque transmitted to the transmission is changed from a drive torque to a coast torque, the slider can be moved by the cam biasing mechanism from a meshed position where the drive torque is transmitted to a meshed position where the coast torque is transmitted. Patent Literature 2, on which the two-part form is based, discloses a saddle-riding type vehicle transmission. The saddle-riding type vehicle transmission includes a transmission that is provided on a saddle-riding type vehicle and has a shift drum rotating to shift a shift stage, and an actuator that rotation-drives the shift drum. By regulating rotations of the shift drum with the cogging torque of the actuator, the rotation angle of the shift drum is controlled. A pattern of output of the actuator when one-stage shifting the shift stage is variable.

### [Citation List]

### [Patent Literatures]

[Patent Literature 1]WO 2020/250535 A1
[Patent Literature 2] JP 2021 014895 A

### [Summary]

### [Technical Problem]

In connection with the above, suppression of upsizing of the transmission has been demanded.

An object of the present invention is to suppress upsizing of a transmission that is capable of performing seamless shift up.

### [Solution to Problem]

The object is solved by a transmission according to claim 1.

A transmission of an embodiment of the present invention is arranged as described below. The transmission, which is a constant mesh transmission, comprises an input shaft connectable to a driving source and an output shaft connectable to a driving target, on the input shaft and the output shaft, shift gears being provided to be each rotatable relative to the input shaft or the output shaft and immovable in an axial direction of the input shaft and the output shaft, the shift gears corresponding to speed stages in number, on the input shaft and the output shaft, sliders being provided to be each rotatable together with the input shaft or the output shaft, movable in the axial direction, and connectable to at least one of the shift gears, two of the sliders being temporarily in a state of being connected simultaneously with two of the shift gears when shifting up, and in the state of being simultaneously connected, a force of canceling connection of one of the two sliders being generated, at least one cam biasing mechanism being provided on at least one of the input shaft or the output shaft and including a spring which exerts an elastic force in a radial direction of the input shaft or the output shaft, at least one of the sliders having a cam surface which makes contact with the cam biasing mechanism so as to covert the elastic force exerted in the radial direction from the cam biasing mechanism to a force exerted in the axial direction, the sliders being slide gears each of which has a gear tooth surface meshed with a shift gear that is provided on the input shaft or the output shaft, which is different from the shaft on which the each of the sliders is provided, at least one of the slide gears having the cam surface being moved on an outer circumferential surface of the input shaft or the output shaft on which the at least one of the slide gears is provided, by the at least one cam biasing mechanism that is formed on the input shaft or the output shaft on which the at least one of the slide gears is provided, and the cam surface of the at least one of the slide gears being arranged so that the maximum distance from the axial center of the input shaft or the output shaft on which the at least one of the slide gears is provided to the cam surface is shorter than the minimum distance from the axial center to the gear tooth surface of the at least one of the slide gears.

According to this arrangement, at least one of the sliders has a cam surface. Alternatively, each of all sliders may have the cam surface. Each of the sliders is a slide gear having a gear tooth surface meshed with at least one shift gear. The slide gear functions as a slider and a gear meshed with a shift gear at a gear tooth surface. In this way, a gear meshed with a shift gear at a gear tooth surface and a slider are not independent from each other. On the other hand, the slider of Patent Literature 1 is not a slide gear, and the slider is provided on each of an input shaft and an output shaft, in addition to a gear meshed with a shift gear at a gear tooth surface. On this account, in the transmission of the present invention, the input shaft and the output shaft can be arranged to be short as compared to Patent Literature 1.

At least one of the slide gears having the cam surface is moved on an outer circumferential surface of the input shaft or the output shaft on which the at least one of the slide gears is provided, by the at least one cam biasing mechanism that is formed on the input shaft or the output shaft on which the at least one of the slide gears is provided. The cam surface of the at least one of the slide gears is arranged so that the maximum distance from the axial center of the input shaft or the output shaft on which the at least one of the slide gears is provided to the cam surface is shorter than the minimum distance from the axial center of the gear tooth surface to the at least one of the slide gears. On this account, in the transmission of the present invention, the distance between the input shaft and the output shaft is short as compared to Patent Literature 1 in which a slider is provided to move a cam biasing mechanism provided on an outer circumference of each of an input shaft and an output shaft.

As described above, because in the transmission of the present invention the lengths of the input shaft and the output shaft and the distance between the input shaft and the output shaft are arranged to be short, upsizing of the transmission can be suppressed while seamless shift up is achieved.

Preferred embodiments of the present invention are laid down in the dependent claims and are as followed.

In addition to the arrangement above, the transmission of the embodiment of the present invention may be arranged as described below.

At least part of a moving range of at least one of the slide gears provided on the input shaft overlaps at least part of a moving range of at least one of the slide gears provided on the output shaft, when viewed in a direction orthogonal to the axial direction.

According to this arrangement, at least part of a moving range of at least one of the slide gears provided on the input shaft overlaps at least part of a moving range of at least one of the slide gears provided on the output shaft, when viewed in a direction orthogonal to the axial direction. On this account, as compared to a case where the moving range on the input shaft does not overlap the moving range on the output shaft, the input shaft and the output shaft can be arranged to be short. In particular, according to Patent Literature 1, at least part of a moving range of at least one slider provided on the input shaft does not overlap at least part of a moving range of at least one slider provided on the output shaft, when viewed in a direction orthogonal to the axial direction of the input shaft and the output shaft. On this account, in the transmission of the present invention, the input shaft and the output shaft can be arranged to be short as compared to Patent Literature 1.

As described above, because in the transmission of the present invention the lengths of the input shaft and the output shaft are further shortened, upsizing of the transmission can be suppressed while seamless shift up is achieved.

In addition to the arrangements above, the transmission of the embodiment of the present invention may be arranged as described below.

Each of the at least one of the slide gears having the cam surface is arranged to be moved in the axial direction by a shift fork, from a standby position where the each slide gear is unconnected to a shift gear, and
the cam surface of the each slide gear is formed to move the each slide gear in a direction away from the standby position in the axial direction, from the position to which the each slide gear has been moved by the shift fork.

With this arrangement, without using the shift fork, the slide gear can be moved away from the standby position from a position to which the slide gear has been moved by the shift fork, by an elastic force of the cam biasing mechanism. In a transmission capable of performing seamless shift up, as in Patent Literature 1, when a torque transmitted to the transmission is changed from a drive torque to a coast torque, the slider may be required to be moved from a drive meshed position to a coast meshed position. The drive meshed position is a position where the drive torque is transmitted. The coast meshed position is a position where the coast torque is transmitted. According to the arrangement above, the requirement can be met by moving the slide gear from the drive meshed position to the coast meshed position by the cam biasing mechanism, after the slide gear is moved from the standby position to the drive meshed position by the shift fork. On this account, the transmission of the present invention is capable of performing seamless shift up, while avoiding the upsizing of the transmission.

In addition to the arrangements above, the transmission of the embodiment of the present invention may be arranged as described below.

Each of the at least one of the slide gears having the cam surface has a recess or a protrusion to which the shift fork is fitted, and the cam surface of the at least one of the slide gears is formed so that the maximum distance from the axial center to cam surface is shorter than either the minimum distance from the axial center to the recess or the maximum distance from the axial center to the protrusion.

According to this arrangement, the shift fork is fitted to the recess or the protrusion of at least one slide gear having the cam surface. The cam surface of the slide gear is formed so that the maximum distance from the axial center to the cam surface is shorter than either the minimum distance from the axial center to the recess or the maximum distance from the axial center to the protrusion. On this account, the transmission can be downsized in the axial direction. Due to the above, because in the transmission of the present invention the lengths of the input shaft and the output shaft are further shortened, upsizing of the transmission can be suppressed while seamless shift up is achieved.

In addition to the arrangements above, the transmission of the embodiment of the present invention may be arranged as described below.

Each of the at least one of the slide gears having the cam surface is formed so that the cam surface of the each slide gear is positioned inside in the radial direction of the gear tooth surface of the each slide gear, on a plane which at least partially passes through the gear tooth surface of the each slide gear and is orthogonal to the axial direction.

According to this arrangement, the cam surface is provided radially inside the gear tooth surface on a plane that is orthogonal to the axial direction of the input shaft or the output shaft on which at least one slide gear having the cam surface is provided and passes through at least part of the gear tooth surface. To put it differently, when viewed in a direction orthogonal to the axial direction, at least part of the cam surface overlaps at least part of the gear tooth surface. On this account, as compared to a case where the cam surface does not overlap the gear tooth surface, the input shaft and the output shaft can be arranged to be short. Due to the above, because in the transmission of the present invention the lengths of the input shaft and the output shaft are further shortened, upsizing of the transmission can be suppressed while seamless shift up is achieved.

In addition to the arrangements above, the transmission of the embodiment of the present invention may be arranged as described below.

The at least one of the slide gears having the cam surface is a switching slide gear connectable to two of the shift gears provided on the same shaft as the at least one of the slide gears, and speed stages corresponding to the two of the shift gears connected to the switching slide gear are different from each other by at least two speed stages.

According to this arrangement, the switching slide gear provided on the input shaft or the output shaft can be connected to two shift gears. Furthermore, the two shift gears connected to the switching slide gear correspond to speed stages that are different from each other by at least two speed stages. On this account, the transmission can be arranged to achieve seamless shift up by utilizing the movement of the switching slide gear having the cam surface. As compared to a transmission which is arranged so that no switching slide gear is provided and a slide gear having a cam surface is connectable to only one shift gear, it is possible to shorten the input shaft and the output shaft. On this account, the transmission of the present invention is capable of performing seamless shift up, while improving the degree of freedom in designing the transmission and avoiding the upsizing of the transmission.

In addition to the arrangements above, the transmission of the embodiment of the present invention may be arranged as described below.

The slide gears include; two end portion slide gears which are provided at respective ends in the axial direction and are provided on the same one of the input shaft and the output shaft; and at least one slide gear which is provided on the input shaft or the output shaft, which is different from the shaft on which the two end portion slide gears are provided, and at least one of the two end portion slide gears has the cam surface.

According to this arrangement, when two slide gears at the ends in the axial direction of the slide gears are two end portion slide gears, the two end portion slide gears are provided on the same shaft (the input shaft or the output shaft). Among the slide gears, each slide gear different from the two end portion slide gears is provided on a shaft different from the shaft on which the two end portion slide gears are provided. At least one of the two end portion slide gears has the cam surface. On this account, it is possible to realize a design with which seamless shift up is achieved by using the end portion slide gear having the cam surface. In this way, the transmission of the present invention is capable of performing seamless shift up, while improving the degree of freedom in designing the transmission and avoiding the upsizing of the transmission.

In addition to the arrangements above, the transmission of the embodiment of the present invention may be arranged as described below.

Two of the shift gears, which are provided at respective ends in the axial direction, are a first speed gear and a second speed gear.

As compared to the third and higher speed gears, a reaction force exerted to the shift gear is large in the first speed gear and the second speed gear. On this account, when the two shift gears at the both ends in the axial direction of the shift gears are not the first speed gear and the second speed gear, the diameter of at least one of the input shaft or the output shaft or the distance between the input shaft and the output shaft must be long in order to suppress the deflection of at least one of the input shaft or the output shaft, as compared to a case where the two shift gears at the both ends in the axial direction of the shift gears are the first speed gear and the second speed gear. According to the arrangement above, the diameter of at least one of the input shaft or the output shaft and the distance between the input shaft and the output shaft can be reduced as compared to a case where the two shift gears at the both ends in the axial direction of the shift gears are not the first speed gear and the second speed gear. Due to this, in the transmission of the present invention, while seamless shift up can be achieved, upsizing of the transmission can be suppressed by further shortening the diameter of at least one of the input shaft or the output shaft and the distance between the input shaft and the output shaft.

In addition to the previous arrangement above, the transmission of the embodiment of the present invention may be arranged as described below.

The number of the shift gears is six, and the shift gears include a third speed gear, a fourth speed gear, a fifth speed gear, and a sixth speed gear in addition to the first speed gear and the second speed gear, the slide gears include a fifth-speed slide gear connectable to the fifth speed gear and a sixth-speed slide gear connectable to the sixth speed gear, and the fifth-speed slide gear and the sixth-speed slide gear are movable in the axial direction relative to each other, and the fifth speed gear, the fifth-speed slide gear, the sixth-speed slide gear, and the sixth speed gear are provided in this order on the same shaft, and the fifth-speed slide gear has the cam surface.

According to this arrangement, the fifth-speed slide gear and the sixth-speed slide gear connected to the fifth speed gear and the sixth speed gear provided on the same shaft are independently provided. On this account, the transmission can be arranged to achieve seamless shift up from the fifth speed stage to the sixth speed stage by utilizing the movement of the fifth-speed slide gear having the cam surface and the sixth-speed slide gear. Consequently, the transmission of the present invention is capable of performing seamless shift up, while improving the degree of freedom in designing the transmission and avoiding the upsizing of the transmission.

In addition to the arrangements above, the transmission of the embodiment of the present invention may be arranged as described below.

Except bearings used for providing the shift gears, there is no bearing between two of the slide gears, which are provided on the same one of the input shaft and the output shaft and adjacent to each other in the axial direction.

According to this arrangement, there is no bearing between two slide gears which are provided on the same one of the input shaft and the output shaft and adjacent to each other in the axial direction. This bearing excludes the bearings used for providing the shift gears. On this account, in the transmission of the present invention, the input shaft and the output shaft are short as compared to a case where a bearing is provided between two sliders that are on the same shaft and are adjacent to each other in the axial direction. Consequently, the transmission of the present invention is capable of performing seamless shift up, while avoiding the upsizing of the transmission by further shortening the input shaft and the output shaft.

### <Definition of Transmission>

In the present invention and the embodiments, a transmission is provided on at least part of a power transmission path. The power transmission path is a path through which power is transmitted from a driving source to a driving target. The transmission is configured to change a transmission ratio. The transmission ratio is a ratio of rotation speed of an input shaft of the transmission to rotation speed of an output shaft of the transmission. The transmission may include a transmission device configured to change a transmission ratio and a speed reducer configured to reduce the rotation speed of power output from the transmission device, by means of gears, etc. The reduction ratio of the speed reducer is unchanged. In the present invention and the description, the transmission is a multistage transmission which has plural shift gears that are immovable in the axial direction of each of the input shaft and the output shaft and correspond to speed stages in number, and which is configured to transmit power from the input shaft to the output shaft through a shift gear correspond to a selected speed stage. The transmission of the present invention and the description does not include a continuously variable transmission device having no shift gear. The transmission of the present invention and the embodiments may include an auxiliary transmission.

In the present invention and the embodiments, the transmission is a multistage transmission. In the present invention and the embodiments, the transmission is a non-synchronous transmission. In the present invention and the embodiments, the transmission is a constant-mesh transmission. In the present invention and the embodiments, the transmission may be an AMT (Automated Manual transmission) or an MT (Manual Transmission). The AMT is also known as a semi-automatic transmission.

In the present invention and the embodiments, the transmission is mounted on a vehicle, for example. The vehicle on which the transmission is mounted may be a straddled vehicle or an automobile. The straddled vehicle includes a motorcycle, a motor tricycle, a four-wheeled buggy (ATV: All Terrain Vehicle), a snowmobile, and a personal watercraft, for example. The motorcycle includes a scooter, an engine-equipped bicycle, a moped, etc. In the present invention and the embodiments, for example, the transmission may be mounted on an apparatus such as an agricultural machine, which is not a vehicle.

### <Definition of Driving Source>

In the present invention and the embodiments, the driving source is a power source for driving a driving target. The driving target is a vehicle, for example, and is at least one driving wheel among at least one front wheel or at least one rear wheel, when the transmission is mounted on a vehicle. The driving source may include an engine. The driving source may include an engine and an electric motor. The driving source may include an engine and an electric motor with a power generation function of generating power by the output of the engine (or a generator and an electric motor). In this case, the output of the engine may be used solely for the power generation.

### <Definition of Axial Direction>

In the present invention and the embodiments, the axial direction of each of the input shaft and the output shaft is a direction in parallel to each of the rotational central axis of the input shaft and the rotational central axis of the output shaft.

### <Definition of Moving Range>

In the present invention and the description, a moving range indicates a part in the axial direction of the outer circumferential surface of each of the input shaft and the output shaft, where plural slide gears move. The moving range is a part in the axial direction of the outer circumferential surface of each of the input shaft and the output shaft, where plural slide gears move, and is either a splined part where grooves extending along the axial direction are formed in the outer circumferential surface of each of the input shaft and the output shaft or a cylindrical part.

### <Definition of Cam Biasing Mechanism and Cam Surface>

In the present invention and the description, a cam biasing mechanism is formed on either an input shaft or an output shaft on which a slide gear having a cam surface is provided. The cam biasing mechanism may be any mechanism as long as it applies an elastic force to the cam surface of the slide gear in the radial direction of the shaft. The cam biasing mechanism may be formed entirely or partially by a spring. The spring may be a coil spring or a disc spring. In the present invention and the description, the cam surface is provided on at least one slide gear and moves on the outer circumferential surface of the input shaft or the output shaft on which the slide gear is provided.

In the claims, when the number of a constituent feature is not clearly specified and the constituent feature is expressed in a singular form in English, the number of the constituent feature may be more than one in the present invention. In the present invention, the number of the constituent features may be only one.

In the present invention and the embodiments, terms "including", "comprising", "having", and derivatives thereof are used to encompass not only listed items and equivalents thereof but also additional items.

In the present invention and the embodiments, the terms "mounted", "connected", "coupled", and "supported" are used in broad sense. Specifically, not only direct attachment, connection, coupling, and support but also indirect attachment, connection, coupling, and support are included. Further, connected and coupled are not limited to physical or mechanical connections and couplings. They also include direct or indirect electrical connections and couplings.

Unless otherwise defined, all terms (technical and scientific terms) used in this specification and claims indicate meanings typically understood by a person with ordinary skill in the art in the technical field to which the present invention belongs. Terms such as those defined in commonly used dictionaries are to be interpreted as having meaning that is consistent with their meaning in the context of the relevant art and the present disclosure, and are not to be interpreted in an idealized or excessively formal sense.

In the present invention and the embodiments, the term "preferable" is non-exclusive. The term "preferable" means "preferable but not limited to". In this specification, an arrangement which is "preferable" exerts at least the above-described effects of the arrangement of claim 1. In this specification, the term "may" is non-exclusive. The term "may" indicate "may but not must". In this specification, an arrangement which is explained by using the term "may" exerts at least the above-described effects of the arrangement of claim 1.

In the present invention and the embodiments, the preferred arrangements of the different aspects described above may be variously combined. Before the embodiments of the present invention are detailed, it is informed that the present invention is not limited to the configurations and layout of elements described below and/or shown in drawings. The present invention is also applicable to embodiments other than the embodiments described later. The present invention may be implemented as an embodiment other than the below-described embodiment. Furthermore, the present invention may be implemented by suitably combining below-described embodiments and modifications, wherein the present invention is defined by the appended claims.

### [Advantageous Effects]

The transmission of the present invention is capable of performing seamless shift up, while upsizing of the transmission is avoided.

### [Brief Description of Drawings]

FIG. 1 includes schematic diagrams illustrating a structure of a transmission of First Embodiment.
FIG. 2 is a schematic diagram illustrating another structure of the transmission of First Embodiment.
FIG. 3 includes schematic diagrams illustrating a structure of a transmission of Second Embodiment.
FIG. 4 includes schematic diagrams illustrating movement of a slide gear in Third Embodiment.
FIG. 5 includes schematic diagrams illustrating structures of slide gears of Fourth Embodiment and Fifth Embodiment.
FIG. 6 is a schematic cross section of the slide gear of Sixth Embodiment.
FIG. 7 is a schematic cross section of a transmission of Seventh Embodiment.
FIG. 8 includes developed sectional views of a shift gear and a slide gear of the transmission of Seventh Embodiment.
FIG. 9 is a schematic cross section of a transmission of Eighth Embodiment.

### [Description of Embodiments]

### [First Embodiment]

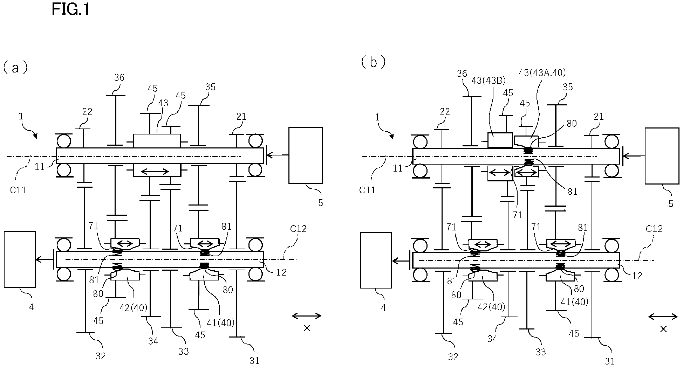

The following will describe a transmission 1 of First Embodiment of the present invention with reference to FIG. 1(a) and FIG. 1(b). FIG. 1(a) and FIG. 1(b) show two examples of the transmission 1 of First Embodiment. The transmission 1 of First Embodiment may be structurally different from those in FIG. 1(a) and FIG. 1(b).

The transmission 1 includes an input shaft 11 and an output shaft 12. The transmission 1 is configured to be able to transmit power of the input shaft 11 to the output shaft 12. The input shaft 11 is connectable to a driving source 5. The output shaft 12 is connectable to a driving target 4. On the input shaft 11 and the output shaft 12, shift gears 31, 32, 33, 34, 35, and 36 are provided to correspond to speed stages in number. In other words, on the input shaft 11 or the output shaft 12, shift gears 31, 32, 33, 34, 35, and 36 are provided to correspond to speed stages in number. In the examples shown in FIG. 1(a) and FIG. 1(b), the maximum number of speed stage is six. Each of the shift gears 31, 32, 33, 34, 35, and 36 is provided to be rotatable relative to the input shaft 11 or the output shaft 12 and immovable in the axial direction of the input shaft 11 or the output shaft 12. The shift gears 31, 32, 33, 34, 35, and 36 are a first speed gear, a second speed gear, a third speed gear, a fourth speed gear, a fifth speed gear, and a sixth speed gear, respectively. In FIG. 1, an arrow X indicates the axial direction of each of the input shaft 11 and the output shaft 12. In the descriptions below, an axial direction indicates the axial direction of each of the input shaft 11 and the output shaft 12.

On the input shaft 11 and the output shaft 12, sliders 41, 42, and 43 are provided. Each of the sliders 41, 42, and 43 is provided to be rotatable together with the input shaft 11 or the output shaft 12 and movable in the axial direction. Each of the sliders 41, 42, and 43 is connectable to at least one of the shift gears 31 to 36. Through the shift gears 31 to 36 connected to the sliders 41, 42, and 43, power is transmitted from the input shaft 11 to the output shaft 12. In the examples shown in FIG. 1(a) and FIG. 1(b), the slider 41 having been moved is connected to the shift gear 31 or the shift gear 33. The slider 42 having been moved is connected to the shift gear 32 or the shift gear 34. The slider 43 having been moved is connected to the shift gear 35 or the shift gear 36. In the example shown in FIG. 1(a), the number of sliders 43 is one. In the example shown in FIG. 1(b), the number of sliders 43 is two, which are sliders 43A and 43B.

Two of the sliders 41, 42, and 43 are arranged to be temporarily in a state of being simultaneously connected to two shift gears among the shift gears 31 to 36, when shift up is performed. To these two sliders, a force of canceling the connection of one of the two sliders is exerted when the sliders are simultaneously connected to two shift gears among the shift gears 31 to 36. On this account, the transmission 1 is able to perform seamless shift up without interrupting the power. In the example shown in FIG. 1(a), the transmission 1 is arranged to be able to seamlessly perform shift up to the second speed, the third speed, and the fourth speed. In the example shown in FIG. 1(b), the transmission 1 is arranged to be able to seamlessly perform shift up to the second speed stage, the third speed stage, the fourth speed stage, the fifth speed stage, and the sixth speed stage.

The transmission 1 includes at least one cam biasing mechanism 80. The at least one cam biasing mechanism 80 is provided on at least one of the input shaft 11 or the output shaft 12. Each cam biasing mechanism 80 includes a spring 81. The spring 81 exerts an elastic force in the radial direction of the input shaft 11 or the output shaft 12.

At least one of the sliders 41, 42, and 43 has a cam surface 71. The at least one slider having the cam surface 71 among the sliders 41, 42, and 43 will be collectively termed a slider 40. In the examples shown in FIG. 1(a) and FIG. 1(b), each of the two sliders 41 and 42 has the cam surface 71. In the example shown in FIG. 1(b), the slider 43A among the two sliders 43 has the cam surface 71, too. The number of sliders 40 having the cam surface 71 may be one or more than one. The cam surface 71 is formed on one of the two sliders simultaneously connected to two shift gears when shifting up, to which a force of canceling the connection is applied. The cam surface 71 makes contact with the cam biasing mechanism 80 so as to convert an elastic force exerted in the radial direction from the cam biasing mechanism 80 to a force exerted in the axial direction. The cam biasing mechanism 80 is provided for each slider 40 having the cam surface 71.

The sliders 41, 42, and 43 are slide gears 41, 42, and 43. Each of the slide gears 41, 42, and 43 has a gear tooth surface 45 which is meshed with a shift gear that is provided on the input shaft 11 or the output shaft 12, which is different from the shaft on which that slide gear is provided. One gear tooth surface 45 is meshed with one shift gear. Each of the slide gears 41, 42, and 43 has at least one gear tooth surface 45 meshed with at least one shift gear. Each gear tooth surface 45 is always meshed with one of the shift gears 31 to 36. In the examples shown in FIG. 1(a) and FIG. 1(b), the slide gear 41 has one gear tooth surface 45 meshed with the shift gear 35, and the slide gear 42 has one gear tooth surface 45 meshed with the shift gear 36. In the example shown in FIG. 1(a), the slide gear 43 has two gear tooth surfaces 45 meshed with two shift gears 33 and 34, respectively. In the example shown in FIG. 1(b), the slide gear 43A has one gear tooth surface 45 meshed with the shift gear 33, and the slide gear 43B has one gear tooth surface 45 meshed with the shift gear 34.

In the examples shown in FIG. 1(a) and FIG. 1(b), on the input shaft 11, a meshing gear 21, a fifth speed gear 35, a slide gear 43, a sixth speed gear 36, and a meshing gear 22 are provided in this order in the axial direction. Among these members, the meshing gear 21 is closest to an end portion of the input shaft 11, with which the driving source 5 is connected. On the input shaft 12, a first speed gear 31, a slide gear 41, a third speed gear 33, a fourth speed gear 34, a slide gear 42, and a second speed gear 32 are provided in this order in the axial direction. Among these members, the first speed gear 31 is closest to an end portion of the input shaft 11, with which the driving source 5 is connected. Each of the meshing gear 21 and the meshing gear 22 is arranged to be rotatable together with the input shaft 11 and immovable in the axial direction.

At least one cam biasing mechanism 80 is formed on the input shaft 11 or the output shaft 12, on which at least one slide gear 40 having the cam surface 71 is provided. In other words, at least one cam biasing mechanism 80 is formed on at least one of the input shaft 11 or the output shaft 12, on which at least one slide gear 40 having the cam surface 71 is provided. The cam biasing mechanism 80 is provided for each slide gear 40 having the cam surface 71. In the example shown in FIG. 1(a), two cam biasing mechanisms 80 are formed on the output shaft 12 on which slide gears 41 and 42 are provided. In the example shown in FIG. 1(b), three cam biasing mechanisms 80 are formed on the input shaft 11 and the output shaft 12 on which slide gears 41, 42, and 43A are provided. At least one slide gear 40 having the cam surface 71 is arranged to be moved on the outer circumferential surface of the input shaft 11 or the output shaft 12 on which the at least one slide gear 40 is provided, by at least one cam biasing mechanism 80. The cam surface 71 of the slide gear 40 is arranged so that the maximum distance from the axial center (C11 or C12) of the input shaft 11 or the output shaft 12 on which the at least one slide gear 40 is provided to the cam surface 71 is shorter than the minimum distance from the axial center (C11 or C12) of the gear tooth surfaces 45 to the slide gears 41 and 42. The axial center C11 is the axial center of the input shaft 11, whereas the axial center C12 is the axial center of the output shaft 12. In the case of the cam surface 71 of the slide gear 41 shown in FIG. 1(a), the cam surface 71 of the slide gear 41 is arranged so that the maximum distance from the axial center C12 of the output shaft 12 on which the slide gear 41 is provided to the cam surface 71 is shorter than the minimum distance from the axial center C12 of the gear tooth surface 45 to the slide gear 41.

Because in the transmission 1 of First Embodiment the lengths of the input shaft 11 and the output shaft 12 and the distance between the input shaft 11 and the output shaft 12 are arranged to be short, upsizing of the transmission 1 can be suppressed while seamless shift up is achieved.

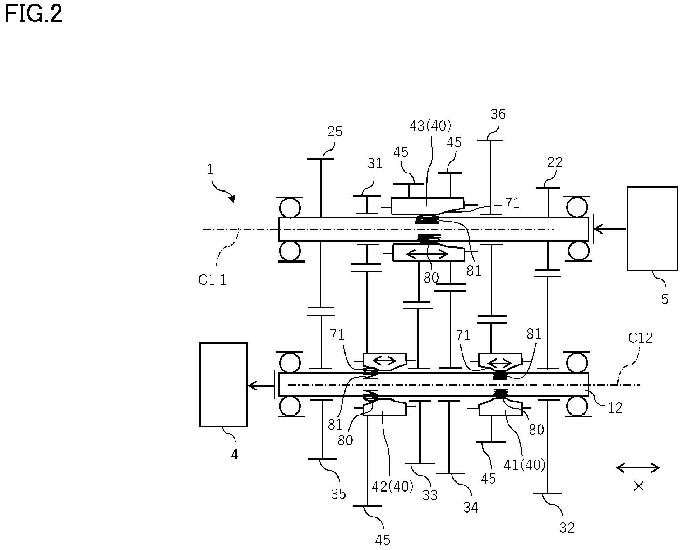

While the highest speed stage of the transmission 1 of First Embodiment shown in FIG. 1(a) and FIG. 1(b) is the sixth speed stage, the highest speed stage of the transmission 1 of First Embodiment may not be the sixth speed stage but be any speed stage. The arrangement of the shift gears of the transmission 1 of First Embodiment may be different from the arrangement in the examples of FIG. 1(a) and FIG. 1(b). In the examples of the transmission 1 shown in FIG. 1(a) and FIG. 1(b), on the input shaft 11 and the output shaft 12, the first speed gear 31, the fifth speed gear 35, the third speed gear 33, the fourth speed gear 34, the sixth speed gear 36, and the second speed gear 32 are provided in this order in the axial direction. For example, as in the example of the transmission 1 shown in FIG. 2, on the input shaft 11 and the output shaft 12, the second speed gear 32, the sixth speed gear 36, the fourth speed gear 34, the third speed gear 33, the first speed gear 31, and the fifth speed gear 35 may be provided in order in the axial direction. In the example of FIG. 2, on the input shaft 11, the meshing gear 22, the sixth speed gear 36, the slide gear 43, the first speed gear 31, and the meshing gear 25 are provided in this order in the axial direction. To put it differently, on the input shaft 11 and the output shaft 12, the even-number-th shift gears and the odd-number-th shift gears are provided in this order in the axial direction, or the odd-number-th shift gears and the even-number-th shift gears are provided in this order in the axial direction.

In the examples shown in FIG. 1(a) and FIG. 1(b), the two end portion slide gears 41 and 42 at the respective ends in the axial direction among the slide gears 41, 42, and 43 are on the same one of the input shaft 11 and output shaft 12. The sliders 41, 42, and 43 further include at least one slide gear 43 which is provided on a shaft different from the input shaft 11 or the output shaft 12 on which the two end portion slide gears 41 and 42 are provided. In the examples shown in FIG. 1(a) and FIG. 1(b), each of the two end portion slide gears 41 and 42 has the cam surface 71. Alternatively, only one of the two end portion slide gears 41 and 42 may have the cam surface 71.

In the examples shown in FIG. 1(a) and FIG. 1(b), two shift gears at the both ends in the axial direction among the shift gears 31 to 36 are the first speed gear 31 and the second speed gear 32. While in the examples shown in FIG. 1(a) and FIG. 1(b) the first speed gear 31 and the second speed gear 32 are both provided on the output shaft 12, the disclosure is not limited to this arrangement. In the transmission 1 of First Embodiment, the first speed gear 31 and the second speed gear 32 may be provided at the both ends in the axial direction among the shift gears 31 to 36 and provided both on the input shaft 11. Because the two shift gears at the both ends in the axial direction of the shift gears 31 to 35 are the first speed gear 31 and the second speed gear 32, the diameter of at least one of the input shaft 11 or the output shaft 12 and the distance between the input shaft 11 and the output shaft 12 can be reduced as compared to a case where the two shift gears at the both ends in the axial direction of the shift gears 31 to 35 are not the first speed gear 31 and the second speed gear 32. On this account, the transmission 1 is capable of performing seamless shift up, while avoiding the upsizing of the transmission 1.

In the transmission 1 of First Embodiment, the two shift gears at the both ends in the axial direction among the shift gears 31 to 36 may not be the first speed gear 31 and the second speed gear 32 (see e.g., FIG. 2).

In the example shown in FIG. 1(b), the slide gears 41, 42, and 43 include a fifth-speed slide gear 43 (43A) connectable with the fifth speed gear 35 and a sixth-speed slide gear 43 (43B) connectable with the sixth speed gear 36. The fifth-speed slide gear 43 (43A) and the sixth-speed slide gear 43 (43B) are movable relative to each other in the axial direction. The fifth speed gear 35, the fifth-speed slide gear 43 (43A), the sixth-speed slide gear 43 (43B), and the sixth speed gear 36 are provided in this order on the same shaft in the axial direction. The fifth-speed slide gear 43 (43A) is provided with a cam surface 71. In the example shown in FIG. 1(b), the fifth speed gear 35, the fifth-speed slide gear 43, the sixth-speed slide gear 43, and the sixth speed gear 36 are provided on the input shaft 11. Alternatively, these members may be provided on the output shaft 12. As the slide gears connected to the fifth speed gear 35 and the sixth speed gear 36, respectively, are different, it is possible to arrange the transmission 1 so that seamless shift up from the fifth speed stage to the sixth speed stage is achieved by sliding of the fifth-speed slide gear 43 (43A) having the cam surface 71 and the sixth-speed slide gear 43 (43B). On this account, the transmission 1 shown FIG. 1(b) is capable of performing seamless shift up, while improving the degree of freedom in designing the transmission 1 and avoiding the upsizing of the transmission 1.

In the examples shown in FIG. 1(a) and FIG. 1(b), the slide gear 41, 42 having the cam surface 71 is a switching slide gear. In the example shown in FIG. 1(b), the slide gear 43 having the cam surface 71 is not a switching slide gear. A switching slide gear can be connected with two shift gears among the shift gears 31 to 36, which are provided on the same shaft (either the input shaft 11 or the output shaft 12) as the switching slide gear. Furthermore, the two shift gears connected to the switching slide gear correspond to speed stages that are different from each other by at least two speed stages. In the examples shown in FIG. 1(a) and FIG. 1(b), the switching slide gear 41 provided on the output shaft 12 can be connected to two shift gears 31 and 33. Furthermore, the switching slide gear 42 provided on the output shaft 12 can be connected to two shift gears 32 and 34. The speed stages to which the two shift gears connected to the switching slide gear correspond may not be limited to the above, on condition that the speed stages are different from each other by at least two speed stages. Because a slide gear 40 having the cam surface 71 is a switching slide gear, the transmission 1 can be arranged to achieve seamless shift up by utilizing the movement of the switching slide gear 40 having the cam surface 71. As compared to a transmission which is arranged so that no switching slide gear is provided and a slide gear having a cam surface is connectable to only one shift gear, it is possible to shorten the input shaft 11 and the output shaft 12. On this account, the transmission 1 shown FIG. 1(a) and FIG. 1(b) is capable of performing seamless shift up, while improving the degree of freedom in designing the transmission 1 and avoiding the upsizing of the transmission 1.

The transmission 1 of First Embodiment may not include the switching slide gear. In other words, the slide gear having the cam surface may be arranged to be connectable to only one shift gear.

Furthermore, all slide gears may be switching slide gears as shown in the example of FIG. 1(a), or some slide gears may be switching slide gears as shown in the example of FIG. 1(b).

### [Second Embodiment]

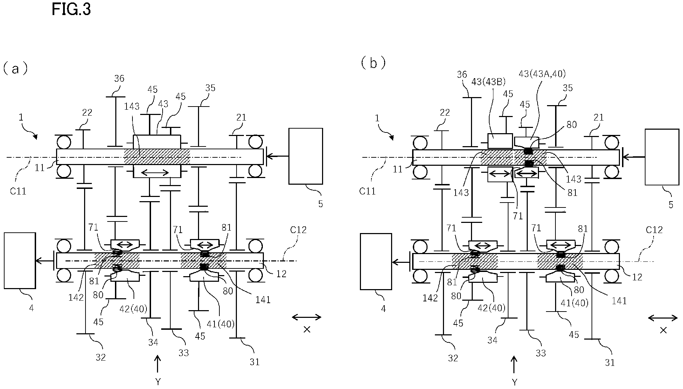

The following will describe a transmission 1 of Second Embodiment of the present invention with reference to FIG. 3(a) and FIG. 3(b). In addition to the characteristics of the transmission 1 of First Embodiment, the transmission 1 of Second Embodiment has features described below.

The input shaft 11 has moving ranges 141 and 142 within which at least one slide gear 41, 42 moves in the axial direction. The output shaft 12 has a moving range 143 within which at least one slide gear 43 moves in the axial direction. In FIG. 3(a) and FIG. 3(b), the moving ranges 141, 142, and 143 are hatched by oblique lines. Slide gears 41, 42, and 43 of Second Embodiment are provided so that at least part of the moving ranges 141 and 142 of the at least one slide gear 41, 42 provided on the input shaft 11 overlap at least part of the moving range 143 of at least one slide gear 43 provided on the output shaft 12, when viewed in a direction orthogonal to the axial direction. In FIG. 3(a) and FIG. 3(b), an arrow Y indicates the direction orthogonal to the axial direction of the input shaft 11 and the output shaft 12. In the example shown in FIG. 3(a), part of the moving range 143 of the input shaft 11 overlaps part of the moving range 141 and part of the moving range 142 of the output shaft 12 when viewed in the direction orthogonal to the axial direction. In the example shown in FIG. 3(b), part of the moving range 143 of the slide gear 43A (43) of the input shaft 11 overlaps part of the moving range 141 of the output shaft 12 when viewed in the direction orthogonal to the axial direction, and part of the moving range 143 of the slide gear 43B (43) of the input shaft 11 overlaps part of the moving range 142 of the output shaft 12 when viewed in the direction orthogonal to the axial direction. As compared to Patent Literature 1, the input shaft 11 and the output shaft 12 can be arranged to be short in the transmission 1 of Second Embodiment.

### [Third Embodiment]

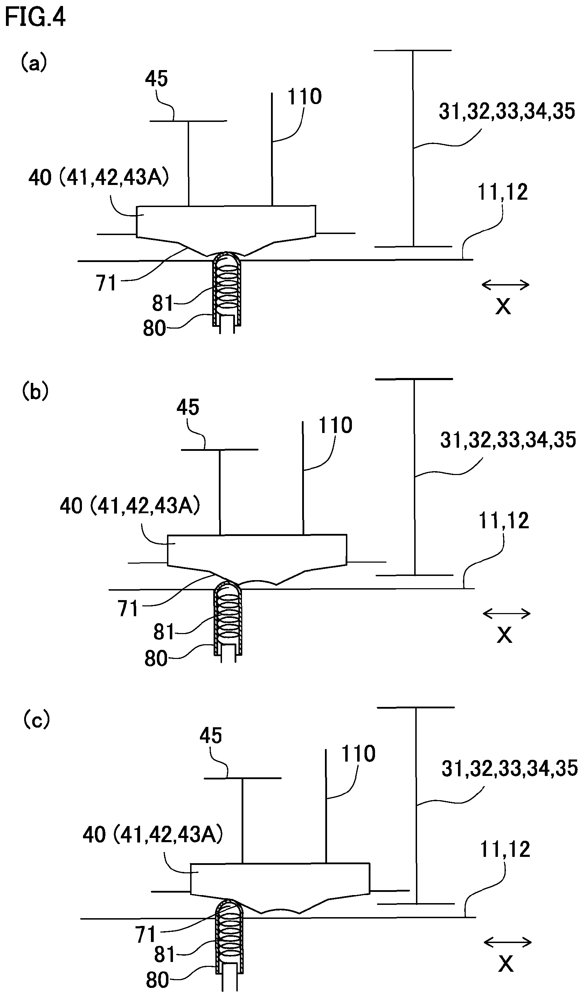

The following will describe a transmission 1 of Third Embodiment of the present invention with reference to FIG. 4(a) to FIG. 4(c). Each of slide gears 40 shown in FIG. 4(a) to FIG. 4(c) is one of the slide gears 41 and 42 in the example shown in FIG. 1(a) and the slide gears 41, 42, and 43A in the example shown in FIG. 1(b). In addition to the characteristics of the transmission 1 of First Embodiment, the transmission 1 of Third Embodiment has features described below.

Each of at least one slide gear 40 having a cam surface 71 is arranged to be moved in the axial direction by a shift fork 110, from a standby position where the slide gear is unconnected to a shift gear. The cam surface 71 of the slide gear 40 is formed to move that slide gear 40 in a direction away from the standby position in the axial direction, from the position to which the slide gear 40 has been moved by the shift fork 110. In other words, the slide gear 40 having the cam surface 71 is moved in a direction away from the standby position in the axial direction, from the position to which the slide gear 40 has been moved by the shift fork 110, by an elastic force of the cam biasing mechanism 80 exerted to the cam surface 71. FIG. 4(a) shows a state in which the slide gear 40 is at the standby position. FIG. 4(b) shows a state in which the slide gear 40 has been moved in the axial direction from the standby position, by the shift fork 110. FIG. 4(c) shows a state in which the slide gear 40 has been moved from the position shown in FIG. 4(b) by an elastic force of the cam biasing mechanism 80 exerted to the cam surface 71. In the transmission 1 capable of performing seamless shift up, for example, as described in the below-described Seventh Embodiment, when a torque transmitted to the transmission 1 is changed from a drive torque to a coast torque, the slide gear 40 may be required to be moved from a drive meshed position to a coast meshed position that is far from the standby position as compared to the drive meshed position. According to this arrangement, this requirement can be met by moving the slide gear 40 from the drive meshed position to the coast meshed position by the cam biasing mechanism 80, after the slide gear 40 is moved from the standby position to the drive meshed position by the shift fork 110. On this account, the transmission 1 of Third Embodiment is capable of performing seamless shift up, while avoiding the upsizing of the transmission 1. It is noted that the state shown in FIG. 4(c) is a state in which the slide gear 40 is at the coast meshed position. It is noted that the state shown in FIG. 4(b) may be a state in which the slide gear 40 is at the drive meshed position. Alternatively, the state shown in FIG. 4(b) may be a state in which the slide gear 40 is at a position between the drive meshed position and the coast meshed position, when shift down is being performed.

### [Fourth Embodiment and Fifth Embodiment]

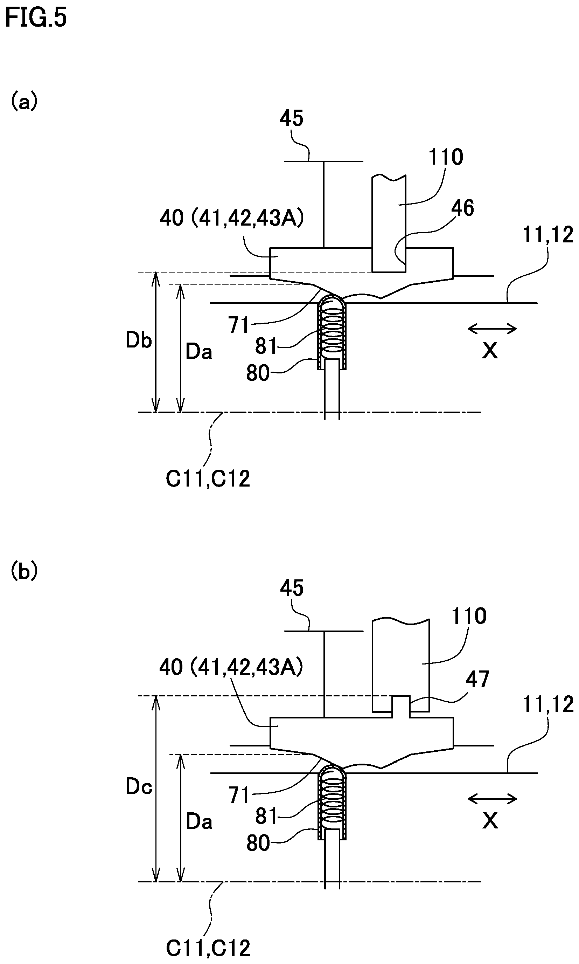

The following will describe a transmission 1 of each of Fourth Embodiment and Fifth Embodiment of the present invention with reference to FIG. 5(a) and FIG. 5(b). FIG. 5(a) shows an arrangement of slide gears 40 of the transmission 1 of Fourth Embodiment. FIG. 5(b) shows an arrangement of slide gears 40 of the transmission 1 of Fifth Embodiment. Each of the slide gears 40 shown in FIG. 5(a) and FIG. 5(b) is one of the slide gears 41 and 42 in the example shown in FIG. 1(a) and the slide gears 41, 42, and 43A in the example shown in FIG. 1(b). In addition to the characteristics of the transmission 1 of First Embodiment, the transmission 1 of each of Fourth Embodiment and Fifth Embodiment has features described below.

In Fourth Embodiment, each of at least one slide gear 40 having a cam surface 71 has a recess 46 with which a shift fork 110 is engaged. The cam surface 71 of the slide gear 40 is formed so that the maximum distance Da to the cam surface 71 from the axial center C11, C12 of the input shaft 11 or the output shaft 12 on which that slide gear 40 is provided is shorter than the minimum distance Db to the recess 46 from the axial center C11, C12 of the input shaft 11 or the output shaft 12 on which that slide gear 40 is provided.

In Fifth Embodiment, each of at least one slide gear 40 having a cam surface 71 has a protrusion 47 with which a shift fork 110 is engaged. The cam surface 71 of the slide gear 40 is formed so that the maximum distance Da to the cam surface 71 from the axial center C11, C12 of the input shaft 11 or the output shaft 12 on which that slide gear 40 is provided is shorter than the maximum distance Dc to the protrusion 47 from the axial center C11, C12 of the input shaft 11 or the output shaft 12 on which that slide gear 40 is provided. In Fourth Embodiment and Fifth Embodiment, the transmission 1 can be downsized in the axial direction. Because in the transmission 1 of each of Fourth Embodiment and Fifth Embodiment the lengths of the input shaft 11 and the output shaft 12 are further arranged to be short, upsizing of the transmission 1 can be suppressed while seamless shift up is achieved.

### [Sixth Embodiment]

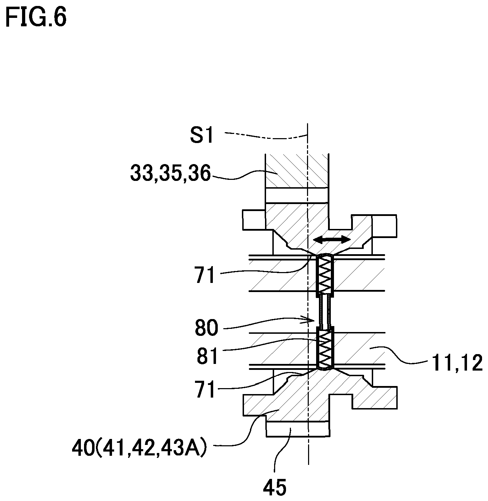

The following will describe a transmission 1 of Sixth Embodiment of the present invention with reference to FIG. 6. A slide gear 40 shown in FIG. 6 is one of the slide gears 41 and 42 in the example shown in FIG. 1(a) and the slide gears 41, 42, and 43A in the example shown in FIG. 1(b). In addition to the characteristics of the transmission 1 of First Embodiment, the transmission 1 of Sixth Embodiment has features described below.

Each of at least one slide gear 40 having the cam surface 71 is formed such that the cam surface 71 of that slide gear 40 is radially inside a gear tooth surface 45 of that slide gear 40 on a plane that passes through at least part of the gear tooth surface 45 of that slide gear 40 and is orthogonal to the axial direction. A plane S1 shown in FIG. 6 is an example of the plane that passes through the gear tooth surface 45 of the slide gear 40 and is orthogonal to the axial direction. In this arrangement, when viewed in a direction orthogonal to the axial direction, at least part of the cam surface 71 overlaps at least part of the gear tooth surface 45. On this account, as compared to a case where the cam surface 71 does not overlap the gear tooth surface 45, the input shaft 11 and the output shaft 12 can be arranged to be short. Because in the transmission 1 of Sixth Embodiment the lengths of the input shaft 11 and the output shaft 12 are further arranged to be short, upsizing of the transmission 1 can be suppressed while seamless shift up is achieved.

### [Seventh Embodiment]

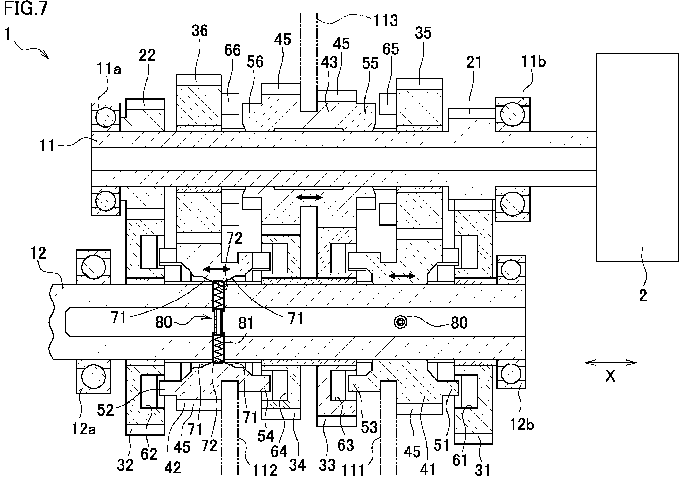

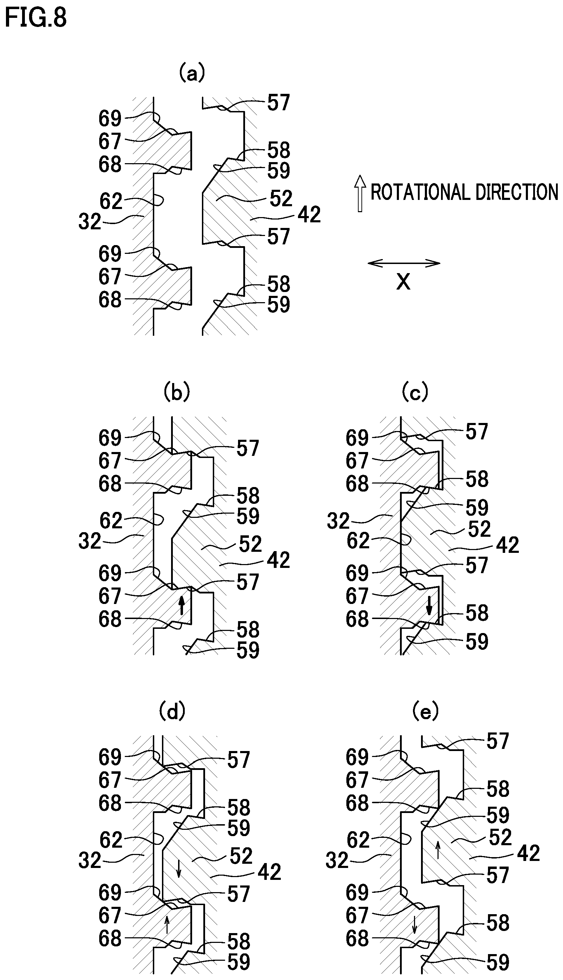

The following will describe a transmission 1 of Seventh Embodiment of the present invention with reference to FIG. 7 and FIG. 8. The transmission 1 of Seventh Embodiment is a specific example of the transmission 1 of First Embodiment shown in FIG. 1(a). The transmission 1 of Seventh Embodiment may have the arrangement of at least one transmission 1 of Second Embodiment to Sixth Embodiment.

The transmission 1 is mounted on, for example, a vehicle (not illustrated) such as a motorcycle. The vehicle includes a driving source 5 such as an engine, the transmission 1, a clutch 2, and a controller (not illustrated). The driving force generated by the driving source 5 is transmitted to a wheel that is a driving target 4 (see FIG. 1(a)) through the clutch 2 and the transmission 1. The controller controls the driving source 5, the transmission 1, and the clutch 2.

The transmission 1 is configured to be able to transmit power of the input shaft 11 to the output shaft 12. The ratio of the rotational speed of the input shaft 11 to the rotation speed of the output shaft 12 is termed a transmission ratio. The transmission 1 has plural speed stages (gear positions) that are different in transmission ratio. The speed stage of the transmission 1 is changed by the controller. The vehicle may include a shift operator (not illustrated) that is operated by the driver to change the speed stage of the transmission 1. The controller changes the speed stage of the transmission 1 in accordance with an operation of the shift operator. The controller may be arranged to be able to automatically change the speed stage of the transmission 1 in accordance with, for example, the vehicle speed, when the shift operator is not operated. The vehicle may not include a shift operator that is operated by the driver to change the speed stage of the transmission 1.

The input shaft 11 is connected to the driving source 5 through the clutch 2. When, for example, the driving source 5 is an engine, the input shaft 11 is connected to the crankshaft of the engine. The clutch 2 is a friction clutch, for example, but is not limited to this. However, the clutch 2 is not a dual clutch. In other words, the transmission 1 is not a dual clutch transmission. The transmission 1 is an AMT (Automated Manual Transmission). In other words, the controller is arranged to be able to automatically change the power transmission ratio of the clutch 2 without requiring an operation by the driver. The controller may control at least one of the clutch 2 or the engine (driving source 5) when changing the speed stage of the transmission 1.

The input shaft 11 is supported by bearings 11a and 11b. The output shaft 12 is supported by bearings 12a and 12b. At least one of the shift gears 31 to 36 may be supported by the input shaft 11 or the output shaft 12 through a bearing. At least one of the shift gears 31 to 36 may be supported by the input shaft 11 or the output shaft 12 without the intermediary of a bearing. Between two slide gears 41 and 42 provided on the input shaft 11 and adjacent to each other in the axial direction, no bearing is provided except bearings used for providing the shift gears 33 and 34.

As shown in FIG. 7, the transmission 1 includes three slide gears 41, 42, and 43. The following will describe an arrangement in which the shift gears 31 to 36 are connected to the slide gears 41, 42, and 43.

The slide gear 41 has dogs 51 that are provided at an end portion opposing the first speed gear 31 in the axial direction. The first speed gear 31 has dogs 61 that are connectable with the dogs 51 of the slide gear 41 by meshing therewith. The slide gear 41 has dogs 53 that are provided at an end portion opposing the third speed gear 33 in the axial direction. The third speed gear 33 has dogs 63 that are connectable with the dogs 53 of the slide gear 41 by meshing therewith. The slide gear 42 has dogs 52 that are provided at an end portion opposing the second speed gear 32 in the axial direction. The second speed gear 32 has dogs 62 that are connectable with the dogs 52 of the slide gear 42 by meshing therewith. The slide gear 42 has dogs 54 that are provided at an end portion opposing the fourth speed gear 34 in the axial direction. The fourth speed gear 34 has dogs 64 that are connectable with the dogs 54 of the slide gear 42 by meshing therewith. The slide gear 43 has dogs 55 that are provided at an end portion opposing the fifth speed gear 35 in the axial direction. The fifth speed gear 35 has dogs 65 that are connectable with the dogs 55 of the slide gear 43 by meshing therewith. The slide gear 43 has dogs 56 that are provided at an end portion opposing the sixth speed gear 36 in the axial direction. The sixth speed gear 36 has dogs 66 that are connectable with the dogs 56 of the slide gear 43 by meshing therewith.

As the slide gears 41, 42, and 43 are moved in the axial direction from the standby position shown in FIG. 7, each of the slide gears 41, 42, and 43 is meshed with one of the shift gears 31 to 36 adjacent to the each slide gear in the axial direction, by means of the dogs. When one of the shift gears 31 to 36 is meshed with a slide gear adjacent to the one shift gear in the axial direction by means of the dogs, power is transmitted from the input shaft 11 to the output shaft 12 through that shift gear and that slide gear. For example, when the first speed gear 31 is meshed with the slide gear 41, the power from the input shaft 11 is transmitted to the gear 21, the first speed gear 31, the slide gear 41, and then the output shaft 12 in order. The speed stage of the transmission 1 in this case is the first speed stage. For example, when the third speed gear 33 is meshed with the slide gear 41, the power from the input shaft 11 is transmitted to the slide gear 43, the third speed gear 33, the slide gear 41, and then the output shaft 12 in order. The speed stage of the transmission 1 in this case is the third speed stage. For example, when the fifth speed gear 35 is meshed with the slide gear 43, the power from the input shaft 11 is transmitted to the slide gear 43, the fifth speed gear 35, the slide gear 41, and then the output shaft 12 in order. The speed stage of the transmission 1 in this case is the fifth speed stage. When none of the shift gears is meshed with a slide gear adjacent to each shift gear in the axial direction, the transmission 1 is in a neutral state. As the movement of the slide gears 41, 42, and 43 in the axial direction is controlled, the speed stage of the transmission 1 is controlled. In other words, the slide gears 41, 42, and 43 are driven in the axial direction in order to change the speed stage.

The dogs 51 are aligned in the circumferential direction. The dogs 52 to 56 and 61 to 66 are also aligned in the circumferential direction. The dogs 51 to 56 of the slide gears 41, 42, and 43 are dog teeth. In other words, the dogs 51 to 56 are formed to protrude in the axial direction. The dogs 61 to 64 of the shift gears 31 to 34 are dog holes. The dogs 61 to 64 are concave in shape. In other words, the dogs 61 to 64 are dog holes that do not penetrate the shift gears 31 to 34 in the axial direction. The dogs 61 to 64 may be dog holes penetrating the shift gears 31 to 36 in the axial direction. The dogs 61 to 64 may be dog teeth. In this case, the dogs 51 to 54 may be dog teeth or dog holes. The dogs 65 and 66 of the shift gears 35 and 36 are dog teeth. The dogs 65 and 66 may be dog holes.

The following will describe common characteristics of the dogs (dog holes) 61 to 64 of the shift gears 31 to 34 and common characteristics of the dogs (dog teeth) 51 to 54 of the slide gears 41 and 42, by taking the dog 62 of the second speed gear 32 and the dog 52 of the slide gear 42 as an example. FIG. 8(a) to FIG. 8(e) are developed sectional views of the second speed gear 32 and the slide gear 42. The up-down direction in each of FIG. 8(a) to FIG. 8(e) indicates the circumferential direction about the rotational central axis of the output shaft 12. The rotational direction of each of the shift gear 32 and the slide gear 42 is an upward direction in FIG. 8(a) to FIG. 8(e). FIG. 8(a) shows a state in which the transmission 1 is at a speed stage different from the second speed stage or at the neutral position. The arrows in FIG. 8(b) and FIG. 8(c) show the direction of the torque generated in the shift gear 32. The arrows in FIG. 8(d) and FIG. 8(e) show the rotational direction of the slide gear 42 relative to the shift gear 32 and the rotational direction of the shift gear 32 relative to the slide gear 42.

The dog (dog tooth) 52 has a drive meshing surface 57, a coast meshing surface 58, and a release guide surface 59. In the axial direction, the drive meshing surface 57 is close to the tip of the teeth as compared to the coast meshing surface 58. The drive meshing surface 57 is tilted in the circumferential direction relative to the axial direction. The drive meshing surface 57 is tilted so that one end of the surface close to the bottom of the teeth is on the downstream in the rotational direction of the shift gear 32 and the slide gear 42 as compared to the other end of the surface far from the bottom of the teeth. The drive meshing surface 57 may be formed to extend along the axial direction. The coast meshing surface 58 is tilted in the circumferential direction relative to the axial direction. The coast meshing surface 58 is tilted so that one end of the surface close to the tip of the teeth is on the downstream in the rotational direction of the shift gear 32 and the slide gear 42 as compared to the other end of the surface far from the tip of the teeth. The coast meshing surface 58 may be formed to extend along the axial direction. The release guide surface 59 is aligned with the drive meshing surface 57 in the circumferential direction. The release guide surface 59 is tilted in the axial direction relative to the circumferential direction. The release guide surface 59 may be spiral in shape relative to the rotational central axis of the output shaft 12, or may extend along the radial direction.

The dog (dog hole) 62 has a drive meshing surface 67, a coast meshing surface 68, and a movement guiding surface 69. The tilt angle and the tilting direction of the drive meshing surface 67 relative to the axial direction are identical with those of the drive meshing surface 57 of the dog 52. The tilt angle and the tilting direction of the coast meshing surface 68 relative to the axial direction are identical with those of the coast meshing surface 58 of the dog 52. The movement guiding surface 69 is tilted in the axial direction relative to the circumferential direction. The movement guiding surface 69 may be spiral in shape relative to the rotational central axis of the output shaft 12, or may extend along the radial direction.

FIG. 8(b) shows a state in which the drive meshing surface 57 is in contact with the drive meshing surface 67 and the dog 52 is meshed with the dog 62. This meshed state will be referred to as a drive meshed state. The position in the axial direction of the slide gear 42 when the slide gear 42 and the shift gear 32 are in the drive meshed state will be referred to as the drive meshed position of the slide gear 42 relative to the shift gear 32. It is noted that the term "drive meshed position" is used no matter whether the drive meshed state is established. When the transmission 1 transmits a drive torque with the second speed stage, the shift gear 32 and the slide gear 42 are in the drive meshed state. The drive torque is a torque transmitted from an engine to a wheel when the engine drives the wheel.

FIG. 8(c) shows a state in which the coast meshing surface 58 is in contact with the coast meshing surface 68 and the dog 52 is meshed with the dog 62. This meshed state will be referred to as a coast meshed state. In the coast meshed state, the dogs 52 and 62 are deeply meshed with each other as compared to the drive meshed state. The position in the axial direction of the slide gear 42 when the slide gear 42 and the shift gear 32 are in the coast meshed state will be referred to as the coast meshed position of the slide gear 42 relative to the shift gear 32. It is noted that the term "coast meshed position" is used no matter whether the coast meshed state is established. When the transmission 1 transmits a coast torque with the second speed stage, the shift gear 32 and the slide gear 42 are in the coast meshed state. The coast torque is a torque generated by the rotational inertia of the wheel and is exerted in the direction opposite to the drive torque. The coast torque is a torque transmitted between the engine and the wheel. The coast torque is generated when, for example, engine braking is performed.

FIG. 8(d) shows a state in which an edge of the dog (dog tooth) 52 is in contact with the movement guiding surface 69. As shown in FIG. 8(d), when the edge of the dog 52 makes contact with the movement guiding surface 69 while the slide gear 42 rotates at a lower speed than the shift gear 32, the slide gear 42 receives a force acting away from the shift gear 32. When the transmission 1 is at the second speed stage and the torque transmitted to the transmission 1 is switched from the coast torque to the drive torque, the slide gear 42 rotates at a lower speed than the shift gear 32. Due to this, the meshing between the coast meshing surfaces 58 and 68 of the slide gear 42 and the shift gear 32 is canceled, and the dog 52 of the slide gear 42 makes contact with the movement guiding surface 69 of the shift gear 32. The dog 52 moves along the movement guiding surface 69, and the slide gear 42 and the shift gear 32 become in the drive meshed state. When the transmission 1 is at the second speed stage and the torque transmitted to the transmission 1 is switched from the drive torque to the coast torque, the slide gear 42 rotates at a speed higher than the shift gear 32. As a result, the meshing between the drive meshing surfaces 57 and 67 of the slide gear 42 and the shift gear 32 is canceled. On account of the elastic force exerted from the spring 81 of the cam biasing mechanism 80 in contact with the cam surface 71, the slide gear 42 moves in a direction in which the slide gear 42 is further deeply meshed, with the result that the slide gear 42 and the shift gear 32 become in the coast meshed state.

FIG. 8(e) shows a state in which the edge of the dog (dog hole) 62 is in contact with the release guide surface 59. As shown in FIG. 8(e), when the edge of the dog 62 makes contact with the release guide surface 59 while the slide gear 42 rotates at a higher speed than the shift gear 32, the slide gear 42 receives a force acting away from the shift gear 32. To put it differently, when the dog 62 makes contact with the release guide surface 59, the force by which the meshing between the dogs 52 and 62 of the shift gear 32 and the slide gear 42 is canceled is generated in the slide gear 42. As detailed later, the release guide surface 59 is used when the speed stage is changed.

The dogs (dog holes) 61 to 64 may be different from one another in shape, as long as they share the above-described common characteristics. At least two of or all of the dogs 61 to 64 may be symmetrical in shape. The dogs (dog teeth) 51 to 54 may be different from one another in shape. At least two of or all of the dogs 51 to 54 may be symmetrical in shape. The dogs (dog teeth) 51 to 54 are different from the dogs (dog teeth) 55 and 56 in shape. The dogs (dog teeth) 55 and 56 may be different in shape, identical in shape, or symmetrical in shape. The dogs (dog teeth) 65 and 66 may be different in shape, identical in shape, or symmetrical in shape. The dogs (dog teeth) 65 and 66 may be different from the dogs (dog teeth) 55 and 56 in shape, identical in shape, or symmetrical in shape.

Each of the dogs 51 to 54 of the slide gears 41 and 42 has the release guide surface 59, whereas each of the dogs 61 to 64 of the shift gears 31 to 34 has the movement guiding surface 69. Each of the dogs of the slide gears 41 and 42 may have both the movement guiding surface and the release guide surface as in the dog of the slider of Patent Literature 1. The dog 54 of the slide gear 42 may not have the release guide surface 59. Each of the dogs 64 of the fourth speed gear 34 and the dogs 54 of the slide gear 42 may not have the movement guiding surface. The shape of each of the dogs 64 of the fourth speed gear 34 and the dogs 54 of the slide gear 42 may be identical with the shape of each of the dogs 65 and 66 of the shift gears 35 and 36 and the dogs 55 and 56 of the slide gear 43.

The transmission 1 is arranged so that, when shifting up, the transmission 1 is temporarily in a double-meshed state where the two slide gears 41 and 42 are simultaneously meshed with two of the shift gears 31 to 34 through dogs. In the temporal double-meshed state, the two slide gears 41 and 42 are temporarily connected to two shift gears simultaneously. For example, when shifting up from the first speed stage to the second speed stage, the transmission 1 is temporarily in the double-meshed state where the two slide gears 41 and 42 are simultaneously meshed with the shift gears 31 and 32 through the dogs 51, 52, 61, and 62. When the slide gear 42 is meshed with the second speed gear 32 through the dogs 52 and 62, the slide gear 41 rotates at a higher speed than the first speed gear 31. The transmission 1 is arranged so that the movement of the slide gear 41 in the axial direction toward the first speed gear 31 is restricted in this case. As a result, the release guide surface 59 of the dog 51 of the slide gear 41 makes contact with the dog 61 of the first speed gear 31 and hence the slide gear 41 moves away from the first speed gear 31 in the axial direction. Due to this, the meshing between the dog 51 of the slide gear 41 and the dog 61 of the first speed gear 31 is canceled. On this account, being different from the controller of the known transmission, the controller is not required to control the clutch 2 and the engine in order to reduce the pressing force generated in accordance with the power transmission between the dog 51 of the slide gear 41 and the dog 61 of the first speed gear 31. As such, the transmission 1 is arranged so that a force of canceling the meshing of the dogs is generated in one of the two slide gears 41 and 42, when the double-meshed state is established. The transmission 1 is therefore able to seamlessly perform shift up to the second speed stage without blocking the power transmission. Likewise, the transmission 1 is able to seamlessly perform shift up to the third speed stage and the fourth speed stage without blocking the power transmission. The transmission 1 is arranged so that the double-meshed state is not established when shifting down.

The following will describe the common characteristics of the slide gears 41 and 42 apart from the dogs, by taking the slide gear 42 as an example. The slide gears 41 and 42 may be different from one another in shape, as long as they share the below-described common characteristics. The slide gears 41 and 42 may be symmetrical in shape.

The slide gear 42 is spline-fitted to the output shaft 12. As shown in FIG. 7, in the inner circumferential surface of the slide gear 42, four cam surfaces 71 and two checking grooves 72 are formed. Each checking groove 72 is formed between two cam surfaces 71 that are aligned in the axial direction. The checking grooves 72 may not be formed. The slide gear 42 makes contact with a cam biasing mechanism 80 provided on the output shaft 12. The cam biasing mechanism 80 makes contact with the four cam surfaces 71 and the two checking grooves 72. The cam surface 71 of the slide gear 42 is separated from the dogs 52 and 54 of the slide gear 42 in the axial direction. The cam biasing mechanism 80 simultaneously makes contact with two cam surfaces 71 aligned in the circumferential direction among the four cam surfaces 71. The number of cam surfaces 71 formed to be aligned in the circumferential direction is not limited to two, and may be three or more. The number of checking grooves 72 formed to be aligned in the circumferential direction is not limited to two, and may be three or more. The checking grooves 72 may be a single groove that is continuous in the circumferential direction. The cam biasing mechanism 80 has a spring 81 which applies an elastic force to the slide gear 42 outward in the radial direction of the output shaft 12.

The cam surface 71 is a slope surface tilted in the radial direction relative to the axial direction. When the slide gear 42 moves in the axial direction, the cam biasing mechanism 80 makes contact with the cam surface 71. The cam surface 71 is configured to convert an elastic force exerted in the radial direction from the cam biasing mechanism 80 to a force in the axial direction. When the cam biasing mechanism 80 makes contact with the cam surface 71, the elastic force of the spring 81 acts as a force of pressing the slide gear 42 in the axial direction in which the checking groove 72 moves away from the cam biasing mechanism 80. The checking groove 72 is formed to allow the cam biasing mechanism 80 to be fitted thereto. When the transmission 1 is in neither the second speed stage nor the fourth speed stage, the cam biasing mechanism 80 is fitted to the checking groove 72 of the slide gear 42.

The slide gears 41, 42, and 43 are connected to the shift forks 111, 112, and 113, respectively. The shift forks 111, 112, and 113 are specific examples of the shift fork 110 of Third Embodiment. The slide gears 41, 42, and 43 move in the axial direction as the shift forks 111, 112, and 113 move in the axial direction. The shift forks 111, 112, and 113 are included in a shift mechanism in which the sliders 41, 42, and 43 are moved by the shift forks 111, 112, and 113. The shift mechanism includes an unillustrated shift actuator that is controlled by the controller. As the controller controls the shift actuator, the shift forks 111, 112, and 113 move in the axial direction. The structure of the shift mechanism is not particularly limited. The shift mechanism may be a mechanism including a shift drum, for example. To be more specific, for example, parts of the shift forks 111, 112, and 113 may be provided in grooves formed in the shift drum, respectively. Alternatively, for example, parts of components connected to the shift forks 111, 112, and 113 so as to move in the axial direction together with the shift forks 111, 112, and 113 may be provided in grooves formed in the shift drum. A mechanism in which the shift drum is rotated by the shift actuator is not particularly limited. The shift mechanism may not include a shift drum. The transmission 1 may be a sequential manual transmission. In other words, the transmission 1 may be arranged so that, when the speed stage (gear position) is changed, the speed stage is changeable to only a speed stage that is adjacent to the speed stage before the change in terms of the transmission ratio.

### [Eighth Embodiment]

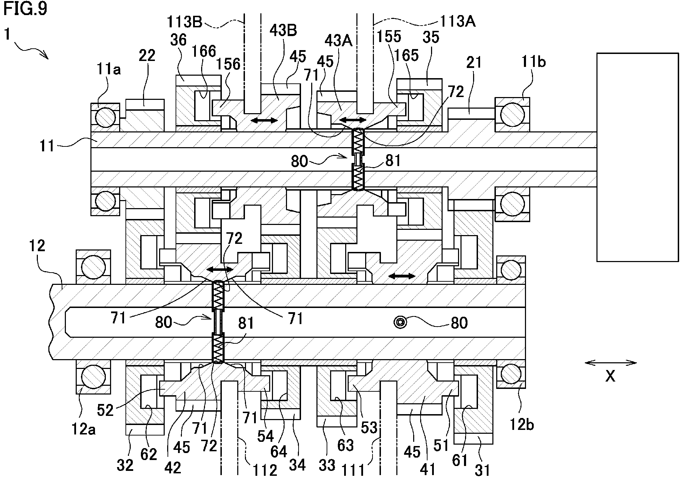

The following will describe a transmission 1 of Eighth Embodiment of the present invention with reference to FIG. 9. The transmission 1 of Eighth Embodiment is a specific example of the transmission 1 of First Embodiment shown in FIG. 1(b). The transmission 1 of Eighth Embodiment may have the arrangement of at least one transmission 1 of Second Embodiment to Sixth Embodiment. The following will describe arrangements which are different from those of Seventh Embodiment.

As shown in FIG. 9, the transmission 1 includes four slide gears 41, 42, 43A, and 43B. The slide gears 43A and 43B are specific examples of the slide gears 43A and 43B shown in FIG. 1(b). Between two slide gears 43A and 43B provided on the output shaft 12 and adjacent to each other in the axial direction, no bearing is provided.

The slide gear 43A has dogs 155 that are provided at an end portion opposing the fifth speed gear 35 in the axial direction. The fifth speed gear 35 has dogs 165 that can be meshed with the dogs 155 of the slide gear 43A. The slide gear 43B has dogs 156 that are provided at an end portion opposing the sixth speed gear 36 in the axial direction. The sixth speed gear 36 has dogs 166 that can be meshed with the dogs 156 of the slide gear 43B. As the slide gears 43A and 43B are moved in the axial direction from the standby position shown in FIG. 9, each of these slide gears is meshed with one of the shift gears 35 and 36 adjacent to the each slide gear in the axial direction, by means of the dogs. When one of the shift gears 35 and 36 is meshed with a slide gear adjacent to the one shift gear in the axial direction by means of the dogs, power is transmitted from the input shaft 11 to the output shaft 12 through that shift gear and that slide gear.

The dogs 155 are aligned in the circumferential direction. The dogs 156, 165, and 166 are also aligned in the circumferential direction. The dogs 155 and 156 of the slide gears 43A and 43B are dog teeth. In other words, the dogs 155 and 156 are formed to protrude in the axial direction. The dogs 165 and 166 of the shift gears 35 and 36 are dog holes. The dogs 165 and 166 are concave in shape. In other words, the dogs 165 and 166 are dog holes that do not penetrate the shift gears 35 and 36 in the axial direction. The dogs 165 and 166 may be dog holes penetrating the shift gears 35 and 36 in the axial direction. The dogs 165 and 166 may be dog teeth. In this case, the dogs 155 and 156 may be dog teeth or dog holes.

The dogs (dog holes) 165 and 166 of the shift gears 35 and 36 have the same characteristics as the common characteristics of the dogs 61 to 64 of the shift gears 31 to 34 described in Eighth Embodiment. The dogs (dog teeth) 155 of the slide gears 43A and 43B have the same characteristics as the common characteristics of the dogs 51 to 54 of the slide gears 41 and 42 described in Eighth Embodiment. Each of the dogs 165 and 166 has a drive meshing surface 67, a coast meshing surface 68, and a movement guiding surface 69. Each of the dogs 155 and 156 has a drive meshing surface 57, a coast meshing surface 58, and a release guide surface 59. Each of the dogs 155 and 156 of the slide gears 43A and 43B may have both the movement guiding surface 69 and the release guide surface 59 as in the dog of the slider of Patent Literature 1. The dog 156 of the slide gear 43B may not have the release guide surface 59. Each of the dogs 166 of the sixth speed gear 36 and the dogs 156 of the slide gear 43 may not have the movement guiding surface. The shape of each of the dogs 166 of the sixth speed gear 36 and the dogs 156 of the slide gear 43B may be identical with the shape of each of the dogs 66 of the shift gear 36 and the dogs 56 of the slide gear 43 of Seventh Embodiment.

With this arrangement, when shifting up to the fifth speed stage, the transmission 1 is temporarily in the double-meshed state where the two slide gears 42 and 43A are simultaneously meshed with the two shift gears 34 and 35 through the dogs. In this double-meshed state, a force of canceling the meshing through the dogs is generated in the slide gear 42. When shifting up to the sixth speed stage, the transmission 1 is temporarily in the double-meshed state where the two slide gears 43A and 43B are simultaneously meshed with the two shift gears 35 and 36 through the dogs. In this double-meshed state, a force of canceling the meshing through the dogs is generated in the slide gear 43A. On this account, the transmission 1 is able to seamlessly perform shift up to the fifth speed stage and shift up to the sixth speed stage.

The slide gear 43A is spline-fitted to the input shaft 11. In the inner circumferential surface of the slide gear 43A, one cam surface 71 and the checking groove 72 are formed to be aligned in the axial direction. The checking groove 72 may not be formed. The checking groove 72 is formed between the cam surface 71 and the dog 155. The slide gear 43A makes contact with a cam biasing mechanism 80 provided on the input shaft 11. The cam biasing mechanism 80 makes contact with the cam surface 71 and the checking groove 72. The cam biasing mechanism 80 has a spring 81 which applies an elastic force to the slide gear 43A outward in the radial direction of the input shaft 11.

The cam surface 71 is a slope surface tilted in the radial direction relative to the axial direction. When the slide gear 43A moves in the axial direction, the cam biasing mechanism 80 makes contact with the cam surface 71. When the cam biasing mechanism 80 makes contact with the cam surface 71, the elastic force of the spring 81 acts as a force of pressing the slide gear 43A in the axial direction in which the checking groove 72 moves away from the cam biasing mechanism 80. The checking groove 72 is formed to allow the cam biasing mechanism 80 to be fitted thereto. When the transmission 1 is not in the fifth speed stage, the cam biasing mechanism 80 is fitted to the checking groove 72 of the slide gear 43A.

The slide gear 43B is spline-fitted to the input shaft 11. The slide gear 43B has neither the cam surface 71 nor the checking groove 72.

The slide gears 43A and 43B are connected to the shift forks 113A and 113B, respectively. The shift forks 113A and 113B move in the axial direction in the same manner as the shift forks 111 and 112, as the controller controls an unillustrated shift actuator.

### [Reference Signs List]

1: transmission, 4: driving target, 5: driving source, 11: input shaft, 12: output shaft, 31, 32, 33, 34, 35, 36: shift gear, 40: slider having cam surface (slide gear having cam surface), 41, 42: slider (slide gear, switching slide gear), 43, 43A, 43B: slider (slide gear), 45: gear tooth surface, 46: recess, 47: protrusion, 71: cam surface, 80: cam biasing mechanism, 81; spring, 110, 111, 112, 113: shift fork, 141, 142, 143: moving range, C11: axial center of input shaft, C12 axial center of output shaft

## Claims

1. A transmission (1) comprising
an input shaft (11) connectable to a driving source (5) and an output shaft (12) connectable to a driving target (4),
on the input shaft (11) and the output shaft (12), shift gears (31 - 36) being provided to be each rotatable relative to the input shaft (11) or the output shaft (12) and immovable in an axial direction of the input shaft (11) and the output shaft (12), the shift gears (31 - 36) corresponding to speed stages in number,
on the input shaft (11) and the output shaft (12), sliders being provided to be each rotatable together with the input shaft (11) or the output shaft (12), movable in the axial direction, and connectable to at least one of the shift gears (31 - 36),
two of the sliders being temporarily in a state of being connected simultaneously with two of the shift gears (31 - 36) when shifting up, and in the state of being simultaneously connected, a force of canceling connection of one of the two sliders being generated,
at least one cam biasing mechanism (80) being provided on at least one of the input shaft (11) or the output shaft (12) and including a spring (81) which is configured to exert an elastic force in a radial direction of the input shaft (11) or the output shaft (12),
at least one (40) of the sliders having a cam surface (71) which is configured to make contact with the cam biasing mechanism (80) so as to covert the elastic force exerted in the radial direction from the cam biasing mechanism (80) to a force exerted in the axial direction,
wherein the transmission (1) is a constant mesh transmission,
**characterized in that**
the sliders being slide gears (40, 41, 42, 43, 43A, 43B) each of which has a gear tooth surface (45) meshed with a shift gear (31 - 36) that is provided on the input shaft (11) or the output shaft (12), which is different from the shaft (11, 12) on which the each of the sliders is provided,
at least one of the slide gears (40, 41, 42, 43, 43A, 43B) having the cam surface (71) being moved on an outer circumferential surface of the input shaft (11) or the output shaft (12) on which the at least one of the slide gears (40, 41, 42, 43, 43A, 43B) is provided, by the at least one cam biasing mechanism (80) that is formed on the input shaft (11) or the output shaft (12) on which the at least one of the slide gears (40, 41, 42, 43, 43A, 43B) is provided, and
the cam surface (71) of the at least one of the slide gears (40, 41, 42, 43, 43A, 43B) being arranged so that the maximum distance from the axial center (C11, C12) of the input shaft (11) or the output shaft (12) on which the at least one of the slide gears having the cam surface (71) is provided is shorter than the minimum distance from the axial center (C11, C12) to the gear tooth surface (45) of the at least one of the slide gears (40, 41, 42, 43, 43A, 43B).

2. The transmission (1) according to claim 1, wherein at least part of a moving range of at least one of the slide gears (40, 41, 42, 43, 43A, 43B) provided on the input shaft (11) overlaps at least part of a moving range of at least one of the slide gears (40, 41, 42, 43, 43A, 43B) provided on the output shaft (12), when viewed in a direction orthogonal to the axial direction.

3. The transmission (1) according to claim 1 or 2, wherein
each of the at least one of the slide gears (40, 41, 42, 43, 43A, 43B) having the cam surface (71) is arranged to be moved in the axial direction by a shift fork (110, 111, 112, 113, 113A, 113B), from a standby position where the each slide gear is unconnected to a shift gear (31 - 36), and
the cam surface (71) of the each slide gear is formed to move the each slide gear in a direction away from the standby position in the axial direction, from the position to which the each slide gear has been moved by the shift fork (110, 111, 112, 113, 113A, 113B).

4. The transmission (1) according to any one of claims 1 to 3, wherein
each of the at least one of the slide gears (40, 41, 42, 43, 43A, 43B) having the cam surface (71) has a recess (46) or a protrusion (47) to which the shift fork (110, 111, 112, 113, 113A, 113B) is fitted, and
the cam surface (71) of the at least one of the slide gears (40, 41, 42, 43, 43A, 43B) is formed so that the maximum distance from the axial center (C11, C12) to the cam surface (71) is shorter than either the minimum distance from the axial center (C11, C12) to the recess (46) or the maximum distance from the axial center (C11, C12) to the protrusion (47).

5. The transmission (1) according to any one of claims 1 to 4, wherein each of the at least one of the slide gears (40, 41, 42, 43, 43A, 43B) having the cam surface (71) is formed so that the cam surface (71) of the each slide gear is positioned inside in the radial direction of the gear tooth surface (45) of the each slide gear, on a plane (S1) which at least partially passes through the gear tooth surface (45) of the each slide gear and is orthogonal to the axial direction.

6. The transmission (1) according to any one of claims 1 to 5, wherein the at least one of the slide gears (40, 41, 42, 43, 43A, 43B) having the cam surface (71) is a switching slide gear (41, 42) connectable to two of the shift gears (31 - 36) provided on the same shaft (11, 12) as the at least one of the slide gears (40, 41, 42, 43, 43A, 43B), and speed stages corresponding to the two of the shift gears (31 - 36) connected to the switching slide gear are different from each other by at least two speed stages.

7. The transmission (1) according to any one of claims 1 to 6, wherein
the slide gears (40, 41, 42, 43, 43A, 43B) include; two end portion slide gears (41, 42) which are provided at respective ends in the axial direction and are provided on the same one of the input shaft (11) and the output shaft (12); and at least one slide gear (43, 43A, 43B) which is provided on the input shaft (11) or the output shaft (12), which is different from the shaft (11, 12) on which the two end portion slide gears (41, 42) are provided, and
at least one of the two end portion slide gears (41, 42) has the cam surface (71).

8. The transmission (1) according to claim 7, wherein two of the shift gears (31 - 36), which are provided at respective ends in the axial direction, are a first speed gear (31) and a second speed gear (32).

9. The transmission (1) according to claim 8, wherein
the number of the shift gears (31 - 36) is six, and the shift gears (31 - 36) include a third speed gear (33), a fourth speed gear (34), a fifth speed gear (35), and a sixth speed gear (36) in addition to the first speed gear (31) and the second speed gear (32),
the slide gears (40, 41, 42, 43, 43A, 43B) include a fifth-speed slide gear (43A) connectable to the fifth speed gear (35) and a sixth-speed slide gear (43B) connectable to the sixth speed gear (36), and the fifth-speed slide gear (43A) and the sixth-speed slide gear (43B) are movable in the axial direction relative to each other, and
the fifth speed gear (35), the fifth-speed slide gear (43A), the sixth-speed slide gear (43B), and the sixth speed gear (36) are provided in this order on the same shaft (11), and the fifth-speed slide gear (43A) has the cam surface (71).

10. The transmission (1) according to any one of claims 1 to 9, wherein the input shaft (11) and the output shaft (12) are supported by bearings (11a, 11b, 12a, 12b), which are not provided between two of the slide gears (41, 42) provided on the same one of the input shaft (11) and the output shaft (12) and adjacent to each other in the axial direction.

## Patentansprüche

1. Ein Getriebe (1), das folgende Merkmale aufweist:
eine Eingangswelle (11), die mit einer Antriebsquelle (5) verbindbar ist, und eine Ausgangswelle (12), die mit einem Antriebsziel (4) verbindbar ist,
wobei auf der Eingangswelle (11) und der Ausgangswelle (12) Schaltzahnräder (31 - 36) bereitgestellt sind, die jeweils relativ zu der Eingangswelle (11) oder der Ausgangswelle (12) drehbar und in einer axialen Richtung der Eingangswelle (11) und der Ausgangswelle (12) unbeweglich sind, wobei eine Anzahl der Schaltzahnräder (31 - 36) einer Anzahl von Gangstufen entspricht,
wobei auf der Eingangswelle (11) und der Ausgangswelle (12) Gleitelemente bereitgestellt sind, die jeweils zusammen mit der Eingangswelle (11) oder der Ausgangswelle (12) drehbar, in der axialen Richtung beweglich und mit mindestens einem der Schaltzahnräder (31 - 36) verbindbar sind,
wobei sich zwei der Gleitelemente vorübergehend in einem Zustand der simultanen Verbindung mit zwei der Schaltzahnräder (31 - 36) beim Hochschalten befinden, und wobei in dem Zustand der simultanen Verbindung eine Kraft zum Aufheben der Verbindung eines der zwei Gleitelemente erzeugt wird,
wobei zumindest ein Nockenvorspannmechanismus (80) auf zumindest einer der Eingangswelle (11) oder der Ausgangswelle (12) bereitgestellt ist und eine Feder (81) umfasst, die dazu konfiguriert ist, eine elastische Kraft in einer radialen Richtung der Eingangswelle (11) oder der Ausgangswelle (12) auszuüben,
wobei zumindest eines (40) der Gleitelemente eine Nockenfläche (71) aufweist, die dazu konfiguriert ist, mit dem Nockenvorspannmechanismus (80) in Kontakt zu treten, um die in der radialen Richtung von dem Nockenvorspannmechanismus (80) ausgeübte elastische Kraft mit einer in der axialen Richtung ausgeübten Kraft zu überlagern,
wobei das Getriebe (1) ein Konstanteingriffsgetriebe ist,
**dadurch gekennzeichnet, dass**
die Gleitelemente Gleitzahnräder (40, 41, 42, 43, 43A, 43B) sind, von denen jedes eine Zahnradzahnfläche (45) aufweist, die mit einem Schaltzahnrad (31 - 36) in Eingriff steht, das auf der Eingangswelle (11) oder der Ausgangswelle (12) bereitgestellt ist, die sich von der Welle (11, 12) unterscheidet, auf der jedes der Gleitelemente bereitgestellt ist,
wobei zumindest eines der Gleitzahnräder (40, 41, 42, 43, 43A, 43B), das die Nockenfläche (71) aufweist, auf einer Außenumfangsfläche der Eingangswelle (11) oder der Ausgangswelle (12), auf der das zumindest eine der Gleitzahnräder (40, 41, 42, 43, 43A, 43B) bereitgestellt ist, durch den zumindest einen Nockenvorspannmechanismus (80) bewegt wird, der auf der Eingangswelle (11) oder der Ausgangswelle (12) ausgebildet ist, auf der das zumindest eine der Gleitzahnräder (40, 41, 42, 43, 43A, 43B) bereitgestellt ist, und
die Nockenfläche (71) des zumindest einen der Gleitzahnräder (40, 41, 42, 43, 43A, 43B) so angeordnet ist, dass der maximale Abstand von der axialen Mitte (C11, C12) der Eingangswelle (11) oder der Ausgangswelle (12), auf der das zumindest eine der Gleitzahnräder, das die Nockenfläche (71) aufweist, bereitgestellt ist, kürzer ist als der minimale Abstand von der axialen Mitte (C11, C12) zu der Zahnradzahnfläche (45) des zumindest einen der Gleitzahnräder (40, 41, 42, 43, 43A, 43B).

2. Das Getriebe (1) gemäß Anspruch 1, wobei bei Betrachtung in einer Richtung orthogonal zu der axialen Richtung zumindest ein Teil eines Bewegungsbereichs von zumindest einem der Gleitzahnräder (40, 41, 42, 43, 43A, 43B), die auf der Eingangswelle (11) bereitgestellt sind, zumindest einen Teil eines Bewegungsbereichs von zumindest einem der Gleitzahnräder (40, 41, 42, 43, 43A, 43B), die auf der Ausgangswelle (12) bereitgestellt sind, überlappt.

3. Das Getriebe (1) gemäß Anspruch 1 oder 2, wobei
jedes des zumindest einen der Gleitzahnräder (40, 41, 42, 43, 43A, 43B), das die Nockenfläche (71) aufweist, dahingehend angeordnet ist, in der axialen Richtung durch eine Schaltgabel (110, 111, 112, 113, 113A, 113B) von einer Bereitschaftsposition, in der das jeweilige Gleitzahnrad nicht mit einem Schaltzahnrad (31 - 36) verbunden ist, bewegt zu werden, und
die Nockenfläche (71) des jeweiligen Gleitzahnrads dahingehend ausgebildet ist, das jeweilige Gleitzahnrad in einer Richtung weg von der Bereitschaftsposition in der axialen Richtung von der Position, zu der das jeweilige Gleitzahnrad durch die Schaltgabel (110, 111, 112, 113, 113A, 113B) bewegt worden ist, zu bewegen.

4. Das Getriebe (1) gemäß einem der Ansprüche 1 bis 3, wobei
jedes des zumindest einen der Gleitzahnräder (40, 41, 42, 43, 43A, 43B), das die Nockenfläche (71) aufweist, eine Aussparung (46) oder einen Vorsprung (47) aufweist, an die/den die Schaltgabel (110, 111, 112, 113, 113A, 113B) gepasst ist, und
die Nockenfläche (71) des zumindest einen der Gleitzahnräder (40, 41, 42, 43, 43A, 43B) so ausgebildet ist, dass der maximale Abstand von der axialen Mitte (C11, C12) zu der Nockenfläche (71) kürzer ist als entweder der minimale Abstand von der axialen Mitte (C11, C12) zu der Aussparung (46) oder der maximale Abstand von der axialen Mitte (C11, C12) zu dem Vorsprung (47).

5. Das Getriebe (1) gemäß einem der Ansprüche 1 bis 4, wobei jedes des zumindest einen der Gleitzahnräder (40, 41, 42, 43, 43A, 43B), das die Nockenfläche (71) aufweist, so ausgebildet ist, dass die Nockenfläche (71) des jeweiligen Gleitzahnrads in der radialen Richtung der Zahnradzahnfläche (45) des jeweiligen Gleitzahnrads auf einer Ebene (S1), die zumindest teilweise durch die Zahnradzahnfläche (45) des jeweiligen Gleitzahnrads verläuft und orthogonal zu der axialen Richtung ist, innen positioniert ist.

6. Das Getriebe (1) gemäß einem der Ansprüche 1 bis 5, wobei das zumindest eine der Gleitzahnräder (40, 41, 42, 43, 43A, 43B), das die Nockenfläche (71) aufweist, ein Schaltgleitzahnrad (41, 42) ist, das mit zwei der Schaltzahnräder (31 - 36) verbindbar ist, die auf derselben Welle (11, 12) wie das zumindest eine der Gleitzahnräder (40, 41, 42, 43, 43A, 43B) bereitgestellt sind, und Gangstufen, die den zwei der Schaltzahnräder (31 - 36) entsprechen, die mit dem Schaltgleitzahnrad verbunden sind, sich voneinander um zumindest zwei Gangstufen unterscheiden.

7. Das Getriebe (1) gemäß einem der Ansprüche 1 bis 6, wobei
die Gleitzahnräder (40, 41, 42, 43, 43A, 43B) Folgendes umfassen: zwei Endabschnittsgleitzahnräder (41, 42), die an jeweiligen Enden in der axialen Richtung bereitgestellt sind und auf derselben aus der Eingangswelle (11) und der Ausgangswelle (12) bereitgestellt sind; und zumindest ein Gleitzahnrad (43, 43A, 43B), das auf der Eingangswelle (11) oder der Ausgangswelle (12) bereitgestellt ist, welche sich von der Welle (11, 12) unterscheidet, auf der die zwei Endabschnittsgleitzahnräder (41, 42) bereitgestellt sind, und
zumindest eines der zwei Endabschnittsgleitzahnräder (41, 42) die Nockenfläche (71) aufweist.

8. Das Getriebe (1) gemäß Anspruch 7, wobei zwei der Schaltzahnräder (31 - 36), die an jeweiligen Enden in der axialen Richtung bereitgestellt sind, ein Erster-Gang-Zahnrad (31) und ein Zweiter-Gang-Zahnrad (32) sind.

9. Das Getriebe (1) gemäß Anspruch 8, wobei
die Anzahl der Schaltzahnräder (31 - 36) sechs ist und die Schaltzahnräder (31 - 36) ein Dritter-Gang-Zahnrad (33), ein Vierter-Gang-Zahnrad (34), ein Fünfter-Gang-Zahnrad (35) und ein Sechster-Gang-Zahnrad (36) zusätzlich zu dem Erster-Gang-Zahnrad (31) und dem Zweiter-Gang-Zahnrad (32) umfassen,
die Gleitzahnräder (40, 41, 42, 43, 43A, 43B) ein Fünfter-Gang-Gleitzahnrad (43A), das mit dem Fünfter-Gang-Zahnrad (35) verbindbar ist, und ein Sechster-Gang-Gleitzahnrad (43B) umfassen, das mit dem Sechster-Gang-Zahnrad (36) verbindbar ist, und das Fünfter-Gang-Gleitzahnrad (43A) und das Sechster-Gang-Gleitzahnrad (43B) in der axialen Richtung relativ zueinander beweglich sind, und
das Fünfter-Gang-Zahnrad (35), das Fünfter-Gang-Gleitzahnrad (43A), das Sechster-Gang-Gleitzahnrad (43B) und das Sechster-Gang-Zahnrad (36) in dieser Reihenfolge auf derselben Welle (11) bereitgestellt sind und das Fünfter-Gang-Gleitzahnrad (43A) die Nockenfläche (71) aufweist.

10. Das Getriebe (1) gemäß einem der Ansprüche 1 bis 9, wobei die Eingangswelle (11) und die Ausgangswelle (12) durch Lager (11a, 11b, 12a, 12b) gelagert sind, die nicht zwischen zwei der Gleitzahnräder (41, 42) bereitgestellt sind, die auf derselben von der Eingangswelle (11) und der Ausgangswelle (12) und in der axialen Richtung benachbart zueinander bereitgestellt sind.

## Revendications

1. Transmission (1) comprenant
un arbre d'entrée (11) pouvant être relié à une source d'entraînement (5) et un arbre de sortie (12) pouvant être relié à une cible entraînée (4),
sur l'arbre d'entrée (11) et l'arbre de sortie (12), des pignons de changement de vitesse (31 - 36) étant prévus pour pouvoir tourner chacun par rapport à l'arbre d'entrée (11) ou à l'arbre de sortie (12) et à rester fixes dans une direction axiale de l'arbre d'entrée (11) et de l'arbre de sortie (12), les pignons de changement de vitesse (31 - 36) correspondant aux rapports de vitesse en nombre,
sur l'arbre d'entrée (11) et l'arbre de sortie (12), des coulisseaux étant prévus pour pouvoir tourner chacun ensemble avec l'arbre d'entrée (11) ou l'arbre de sortie (12), déplaçables dans la direction axiale et pouvant être reliés à au moins un des pignons de changement de vitesse (31 - 36),
deux des coulisseaux étant temporairement dans un état de connexion simultanée avec deux des engrenages de changement de vitesse (31 - 36) lors du passage à la vitesse supérieure, et dans l'état de connexion simultanée, une force d'annulation de connexion de l'un des deux coulisseaux étant générée,
au moins un mécanisme de sollicitation de came (80) étant fourni sur au moins l'un de l'arbre d'entrée (11) ou l'arbre de sortie (12) et incluant un ressort (81) qui est configuré pour exercer une force élastique dans une direction radiale de l'arbre d'entrée (11) ou de l'arbre de sortie (12),
au moins un (40) des coulisseaux présentant une surface de came (71) qui est configurée pour entrer en contact avec le mécanisme de sollicitation de came (80) de façon à convertir la force élastique exercée dans la direction radiale depuis le mécanisme de sollicitation de came (80) en une force exercée dans la direction axiale,
dans laquelle la transmission (1) est une transmission à maille constante,
**caractérisée en ce que**
les coulisseaux étant des pignons coulissants (40, 41, 42, 43, 43A, 43B) dont chacun présente une surface dentée (45) en prise avec un pignon de changement de vitesse (31 - 36) qui est fourni sur l'arbre d'entrée (11) ou l'arbre de sortie (12), qui est différent de l'arbre (11, 12) sur lequel est fourni chacun des coulisseaux,
au moins l'un des pignons coulissants (40, 41, 42, 43, 43A, 43B) présentant la surface de came (71) étant déplacé sur une surface circonférentielle extérieure de l'arbre d'entrée (11) ou de l'arbre de sortie (12) sur lequel l'au moins un des pignons coulissants (40, 41, 42, 43, 43A, 43B) est fourni, par l'au moins un mécanisme de sollicitation de came (80) qui est formé sur l'arbre d'entrée (11) ou l'arbre de sortie (12) sur lequel l'au moins un des pignons coulissants (40, 41, 42, 43, 43A, 43B) est fourni, et
la surface de came (71) de l'au moins un des pignons coulissants (40, 41, 42, 43, 43A, 43B) étant agencée de telle sorte que la distance maximale du centre axial (C11, C12) de l'arbre d'entrée (11) ou de l'arbre de sortie (12) sur lequel l'au moins l'un des pignons coulissants présentant la surface de came (71) est fourni, est inférieure à la distance minimale du centre axial (C11, C12) à la surface dentée (45) de l'au moins un des pignons coulissants (40, 41, 42, 43, 43A, 43B).

2. Transmission (1) selon la revendication 1, dans laquelle au moins une partie de la plage de déplacement d'au moins l'un des pignons coulissants (40, 41, 42, 43, 43A, 43B) fourni sur l'arbre d'entrée (11) chevauche au moins une partie d'une plage de déplacement de l'au moins un des pignons coulissants (40, 41, 42, 43, 43A, 43B) fourni sur l'arbre de sortie (12), lorsque regardée dans une direction orthogonale à la direction axiale.

3. Transmission (1) selon la revendication 1 ou 2, dans laquelle
chacun de l'au moins un des pignons coulissants (40, 41, 42, 43, 43A, 43B) présentant la surface de came (71) est agencé pour être déplacé dans la direction axiale par une fourchette de changement de vitesse (110, 111, 112, 113, 113A, 113B), à partir d'une position d'attente dans laquelle chaque engrenage coulissant n'est pas relié à un engrenage de changement de vitesse (31 - 36), et
la surface de came (71) de chaque pignon coulissant est conçue pour déplacer ledit pignon coulissant dans une direction s'éloignant de la position d'attente dans la direction axiale, à partir de la position vers laquelle chaque engrenage coulissant a été déplacé par la fourchette de changement de vitesse (110, 111, 112, 113, 113A, 113B).

4. Transmission (1) selon l'une quelconque des revendications 1 à 3, dans laquelle
chacun de l'au moins un des pignons coulissants (40, 41, 42, 43, 43A, 43B) présentant la surface de came (71) présente un évidement (46) ou une saillie (47) sur laquelle la fourchette de changement de vitesse (110, 111, 112, 113, 113A, 113B) s'emboîte, et
la surface de came (71) de l'au moins un des pignons coulissants (40, 41, 42, 43, 43A, 43B) est formée de telle sorte que la distance maximale entre le centre axial (C11, C12) et la surface de came (71) soit inférieure soit à la distance minimale entre le centre axial (C11, C12) et l'évidement (46), soit à la distance maximale entre le centre axial (C11, C12) et la saillie (47).

5. Transmission (1) selon l'une quelconque des revendications 1 à 4, dans laquelle chacun de l'au moins un des pignons coulissants (40, 41, 42, 43, 43A, 43B) présentant la surface de came (71) est formé de telle sorte que la surface de came (71) de chaque pignon coulissant est positionnée à l'intérieur dans la direction radiale de la surface dentée (45) de chaque pignon coulissant, sur un plan (S1) qui, au moins partiellement, passe par la surface dentée (45) de chaque pignon coulissant et qui est orthogonal à la direction axiale.

6. Transmission (1) selon l'une quelconque des revendications 1 à 5, dans laquelle l'au moins un des pignons coulissants (40, 41, 42, 43, 43A, 43B) présentant la surface de came (71) est un pignon coulissant de commutation (41, 42) pouvant être relié à deux des pignons de changement de vitesse (31 - 36) fournis sur le même arbre (11, 12) que l'au moins un des pignons coulissants (40, 41, 42, 43, 43A, 43B), et les rapports de vitesse correspondant aux deux pignons de changement de vitesse (31 - 36) reliés au pignon coulissant de commutation sont différents l'un de l'autre par au moins deux rapports de vitesse.

7. Transmission (1) selon l'une quelconque des revendications 1 à 6, dans laquelle
les pignons coulissants (40, 41, 42, 43, 43A, 43B) incluent ; deux pignons coulissants de la partie d'extrémité (41, 42) qui sont fournis aux extrémités respectives dans la direction axiale et qui sont fournis sur le même arbre entre l'arbre d'entrée (11) ou l'arbre de sortie (12) ; et au moins un pignon coulissant (43, 43A, 43B) qui est fourni sur l'arbre d'entrée (11) ou l'arbre de sortie (12), qui est différent de l'arbre (11, 12) sur lequel les deux pignons coulissants de la partie d'extrémité (41, 42) sont fournis, et
au moins l'un des deux pignons coulissants de la partie d'extrémité (41, 42) présente la surface de came (71).

8. Transmission (1) selon la revendication 7, dans laquelle deux des pignons de changement de vitesse (31 - 36), qui sont fournis aux extrémités respectives dans la direction axiale, sont un pignon de première vitesse (31) et un pignon de deuxième vitesse (32).

9. Transmission (1) selon la revendication 8, dans laquelle
le nombre des pignons changement de vitesse (31 - 36) est de six, et les pignons de changement de vitesse (31 - 36) incluent un pignon de troisième vitesse (33), un pignon de quatrième vitesse (34), un pignon de cinquième vitesse (35) et un pignon de sixième vitesse (36), en plus du pignon de première vitesse (31) et du pignon de deuxième vitesse (32),
les pignons coulissants (40, 41, 42, 43, 43A, 43B) incluent un pignon coulissant de cinquième vitesse (43A) pouvant être relié au pignon de cinquième vitesse (35) et un pignon coulissant de sixième vitesse (43B) pouvant être relié au pignon de sixième vitesse (36), et le pignon coulissant de cinquième vitesse (43A) et le pignon coulissant de sixième vitesse (43B) sont mobiles dans la direction axiale l'un par rapport à l'autre, et
le pignon de cinquième vitesse (35), le pignon coulissant de cinquième vitesse (43A), le pignon coulissant de sixième vitesse (43B) et le pignon de sixième vitesse (36) sont fournis dans cet ordre sur le même arbre (11), et le pignon coulissant de cinquième vitesse (43A) présente la surface de came (71).

10. Transmission (1) selon l'une quelconque des revendications 1 à 9, dans laquelle l'arbre d'entrée (11) et l'arbre de sortie (12) sont supportés par des paliers (11a, 11b, 12a, 12b), qui ne sont pas fournis entre deux des pignons coulissants (41, 42) fournis sur le même arbre entre l'arbre d'entrée (11) et l'arbre de sortie (12) et adjacents l'un à l'autre dans la direction axiale.
